# EUROPEAN PATENT APPLICATION

(11) **EP 4 632 168 A1**
(43) Date of publication of application: **15.10.2025**
(21) Application number: 25169652.2
(22) Date of filing: 10.04.2025
(51) Int. Cl.: E04C 2/16, E04B 1/86, E04C 2/52, E04F 13/08, E04B 1/84

(54) **DECORATIVE ACOUSTIC BUILDING PANELS**

(30) Priority: 10.04.2024 US 202463632392 P
(71) Applicant: Turf Design, Inc., Gilberts, IL 60136 (US)
(72) Inventor: KREJCI, Robert, Chicago, Illinois (US); MULLINS, Jacob F., Chicago, Illinois (US); BUSSCHER, Matthew, Chicago, Illinois (US); TUCKER, Cody, Chicago, Illinois (US); WELLS, Adam, Houston, Texas (US)
(74) Representative: Studio Torta S.p.A.

(57) **Abstract**

Described herein is a building panel having a first major exposed surface (11) opposite a second major exposed surface (12), the building panel comprising a first layer (100) comprising a first major surface opposite a second major surface (200), a second layer comprising a first major surface opposite a second major surface, plurality of channels (50) formed into the first major exposed surface, a floor of each of the plurality of channels, the floor comprising at least a first portion of the first major surface of the first layer; and a plurality of grooves (80) formed into the first major exposed surface, each of the plurality of grooves extending across the first major surface of the first layer and the first portion of the first major surface of the second layer.

## Description

### CROSS-REFERENCE TO RELATED APPLICATION

This Application is a United States Non-Provisional Patent Application claiming priority to United States Provisional Patent Application No. 63/632,392, filed on April 10, 2024, the entirety of which is incorporated by reference herein.

### FIELD OF INVENTION

Embodiments of the present invention relate to acoustic building panels having noise reducing and high sound attenuation characteristics.

### BACKGROUND

Various types of building panels have been used in commercial and residential building construction to provide the desired acoustical performance. However, such previous building panels often exhibit poor aesthetic characteristics. Thus, there is a need for a new building panel having improved aesthetic characteristics without sacrificing desired acoustical performance.

### SUMMARY

According to some embodiments, the present invention is directed to a building panel having a first major exposed surface opposite a second major exposed surface, the building panel comprising: a first layer comprising a first major surface opposite a second major surface; a second layer comprising a first major surface opposite a second major surface; a plurality of channels formed into the first major exposed surface, a floor of each of the plurality of channels, the floor comprising at least a first portion of the first major surface of the first layer; a plurality of grooves formed into the first major exposed surface, each of the plurality of grooves extending across the first major surface of the first layer and the first portion of the first major surface of the second layer.

Other embodiments of the present invention include a building panel having a first major exposed surface opposite a second major exposed surface, the building panel comprising: a first layer comprising a first major surface opposite a second major surface, the first layer comprising a first body that is integrally formed; a second layer comprising a first major surface opposite a second major surface, the second layer comprising a plurality of second bodies that are discretely formed and horizontally spaced from each other by a spacing distance; wherein the first major exposed surface of the building panel comprises the first major surface of the second layer and a first portion of the first major surface of the first layer that is located between the horizontally spaced plurality of second bodies of the second layer.

Other embodiments of the present invention include a building panel having a first major exposed surface opposite a second major exposed surface, the building panel comprising: a plurality of channels formed into the first major exposed surface, each of the plurality of channels having a floor and walls; a plurality of grooves formed into the first major exposed surface, each of the plurality of grooves comprising a first groove portion and a second groove portion; wherein the walls of each of the plurality of channels comprises a first visual characteristics and the floor of each of the plurality of channels comprises a second visual characteristics, the first visual characteristics and the second visual characteristics are different; and wherein the first groove portion comprises the first visual characteristic and the second groove portion comprises the second visual characteristic; and wherein the second groove portion is located above the first groove portion in a direction extending from the first major exposed surface to the second major exposed surface of the building panel.

Other embodiments of the present invention include an a building panel having a first major exposed surface opposite a second major exposed surface, the building panel comprising: a first layer comprising a first visual characteristic; a second layer comprising a second visual characteristic; a plurality of channels formed into the first major exposed surface, a floor of each of the plurality of channels, a plurality of walls of each of the plurality of channels, and at least one channel groove is formed into the floor of each of the plurality of the channels; a plurality of grooves formed into the first major exposed surface, a floor of each of the plurality of grooves, and a plurality of walls of each of the plurality of grooves; wherein the first layer comprises at least a portion of the plurality of walls of each of the plurality of channels, and wherein the floor of each of the plurality of channels comprises the first layer; and wherein the first major exposed surface comprises both the first visual characteristics and the second visual characteristic, and wherein the first visual characteristics and the second visual characteristic are different.

Other embodiments of the present invention include a building system comprising at least one of the building panels previously described, the building system comprising a vertical wall and the at least one building panel configured to be secured to the vertical wall.

Other embodiments of the present invention include a method of manufacturing a building panel comprising a) providing a first layer having a first major surface opposite a second major surface and a side surface extending between the first major surface and the second major surface of the first layer, the side surface forming a perimeter of the first layer, the first layer further comprising a plurality of grooves and a plurality of channel grooves formed into the first major surface; b) providing a plurality of second bodies each having a first major surface opposite a second major surface and a side surface extending between the first major surface and the second major surface of the second bodies, at least one of the plurality of second bodies comprising at least one groove formed into the first major surface of the second body; c) aligning the side surface of each of the plurality of second bodies to the plurality of channel grooves on the first layer; and d) coupling the second bodies to the first layer to form the building panel.

### BRIEF DESCRIPTION OF THE DRAWINGS

The features of the exemplary embodiments of the present invention will be described with reference to the following drawings, where like elements are labeled similarly, and in which:
FIG. 1 is a perspective view of a building panel according to the present invention;
FIG. 1A is a close-up view of region 1A from FIG. 1;
FIG. 2 is a front view of the building panel of FIG. 1;
FIG. 3 is a close-up view of region 3 of FIG. 2;
FIG. 4 is a rear view of the building panel of FIG. 1;
FIG. 5A is a cross-sectional view along lines 5A-5A of FIG. 2;
FIG. 5B is a cross-sectional view along lines 5B-5B of FIG. 2;
FIG. 5C is a cross-sectional view of a building panel according to the present invention;
FIG. 5D is a cross-sectional view of a building panel according to the present invention;
FIG. 5E is a cross-sectional view of a building panel according to the present invention;
FIG. 6 is a close-up view of region 6 of FIG. 1;
FIG. 7 is an exploded perspective view of the building panel of FIG. 1;
FIG. 8 is a combination of the building panel of FIG. 1 with a second building panel in a book-matched configuration;
FIG. 9 is a close-up view of region 9 of FIG. 8;
FIG. ° is a combination of the building panel of FIG. 1 with a second building panel in a slip-matched configuration;
FIG. 11 is a close-up view of region 11 of FIG. 10;
FIG. 12 is a combination of the building panel of FIG. 1 with a second building panel in a reverse slip-matched configuration;
FIG. 13 is a close-up view of region 13 of FIG. 12;
FIG. 14 is a combination of building panels according to the present invention in an aesthetic match configuration;
FIG. 15 is a building system comprising a plurality of the building panels according to the present invention;
FIG. 16 is a cross-sectional view of a building panel according to an alternative embodiment;
FIG. 17 is a cross-sectional view of a building panel according to an alternative embodiment;
FIG. 18 is a cross-sectional view of a building panel according to an alternative embodiment;
FIG. 19 is a cross-sectional view of a building panel according to an alternative embodiment; and
FIG. 20 is a cross-sectional view of a building panel according to an alternative embodiment.

All drawings are schematic and not necessarily to scale. Parts given a reference numerical designation in one figure may be considered to be the same parts where they appear in other figures without a numerical designation for brevity unless specifically labeled with a different part number and described herein.

### DETAILED DESCRIPTION

The following description of the preferred embodiment(s) is merely exemplary in nature and is in no way intended to limit the invention, its application, or uses.

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

Unless otherwise specified, all percentages and amounts expressed herein and elsewhere in the specification should be understood to refer to percentages by weight. The amounts given are based on the active weight of the material.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top," and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such.

Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

Unless otherwise specified, all percentages and amounts expressed herein and elsewhere in the specification should be understood to refer to percentages by weight. The amounts given are based on the active weight of the material. According to the present application, the term "about" means +/- 5% of the reference value. According to the present application, the term "substantially free" less than about 0.1 wt. % based on the total of the referenced value.

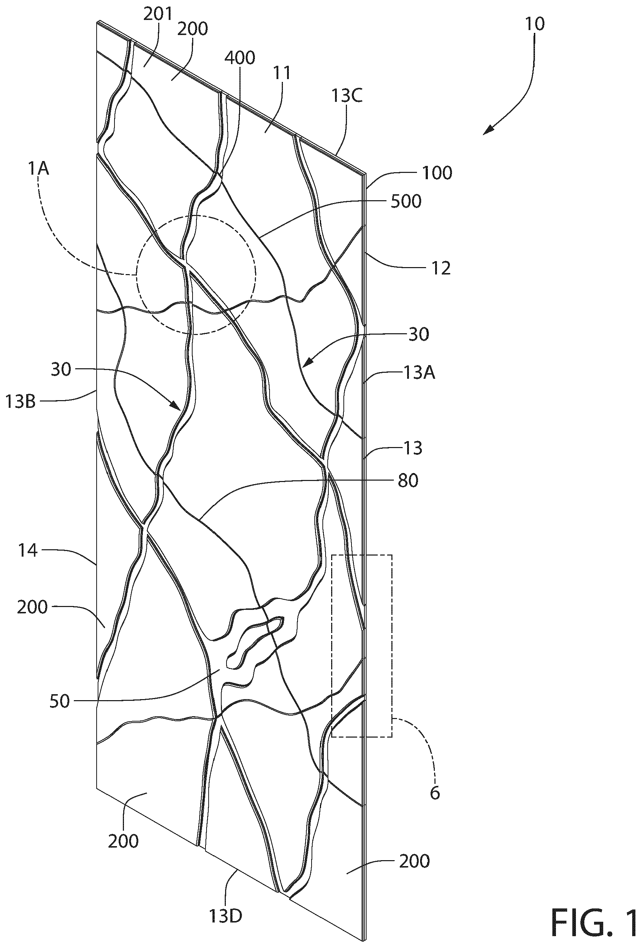

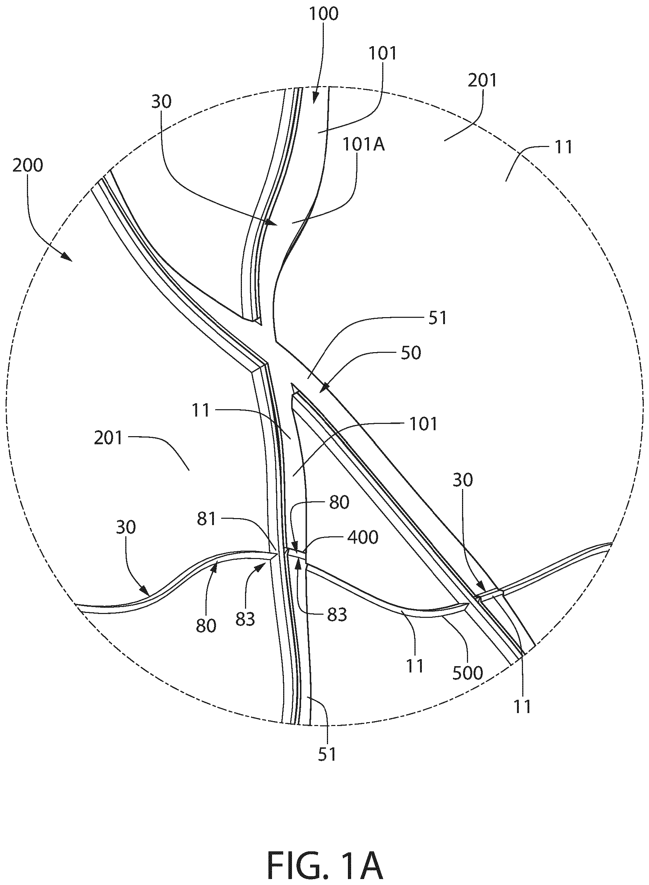

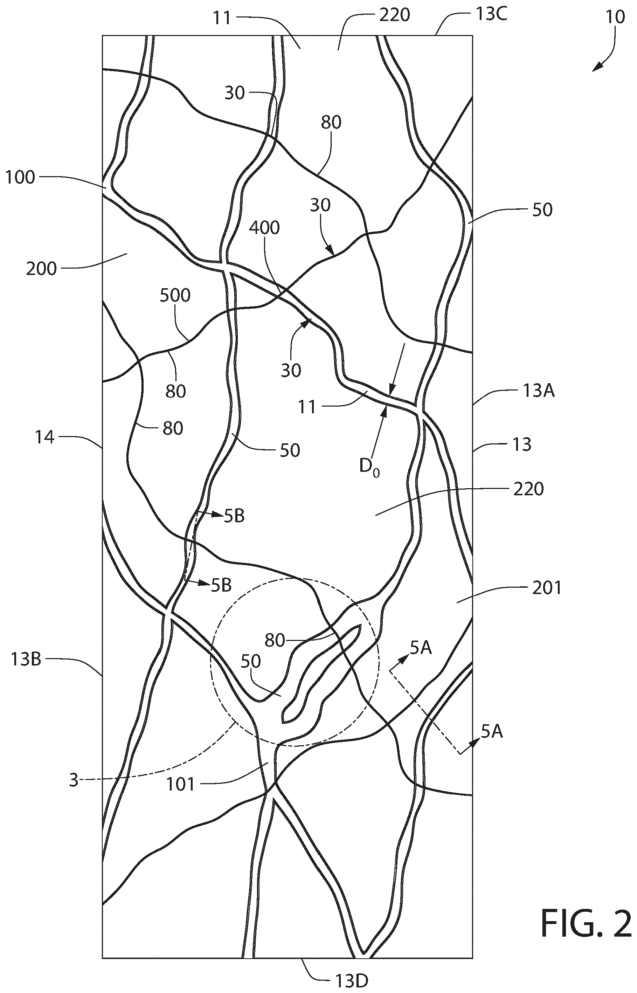

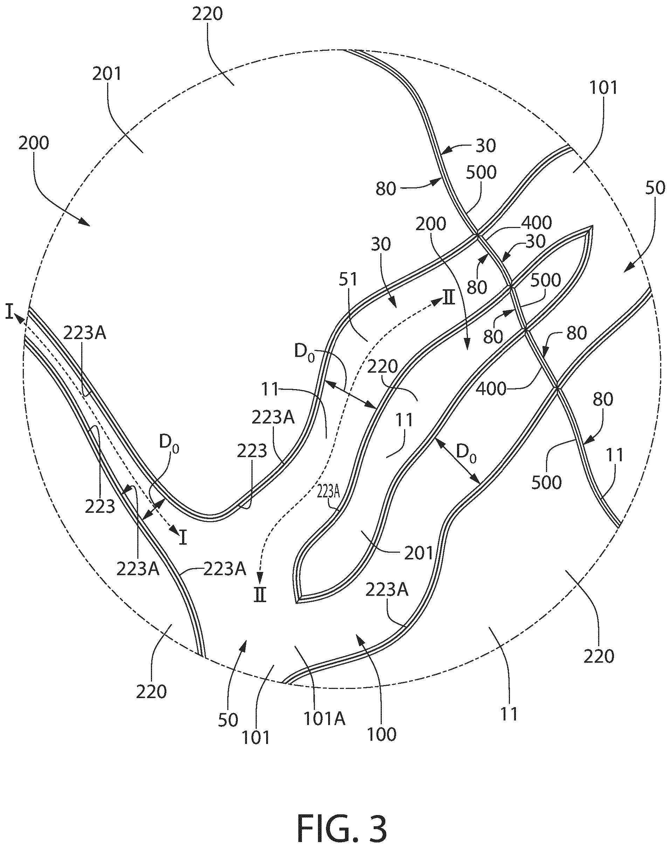

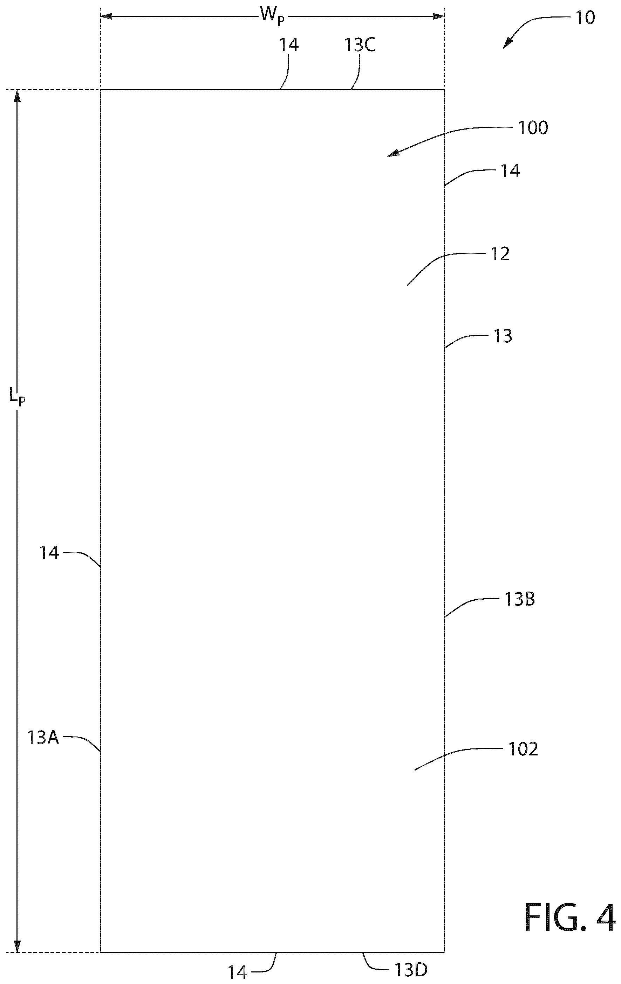

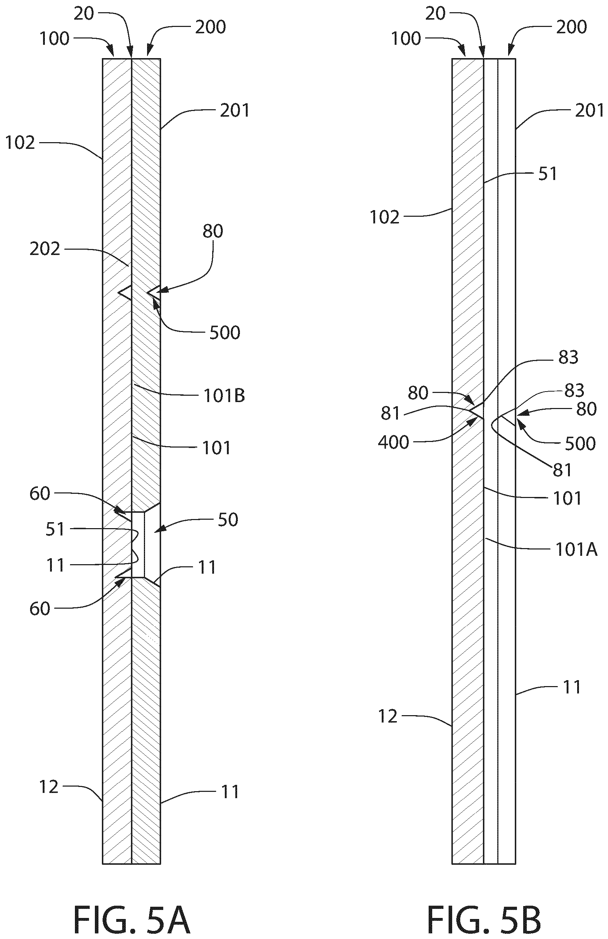

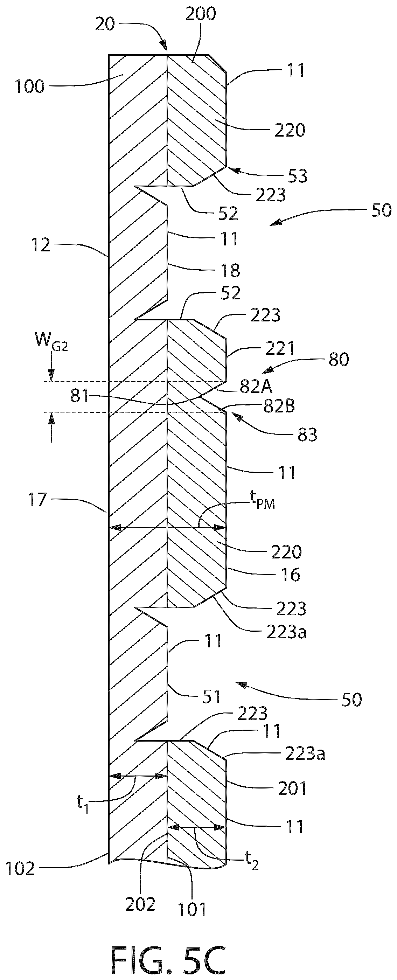

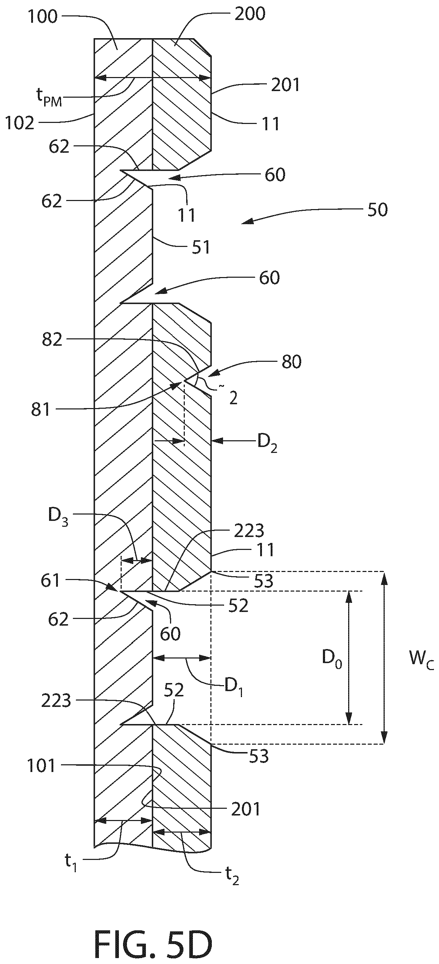

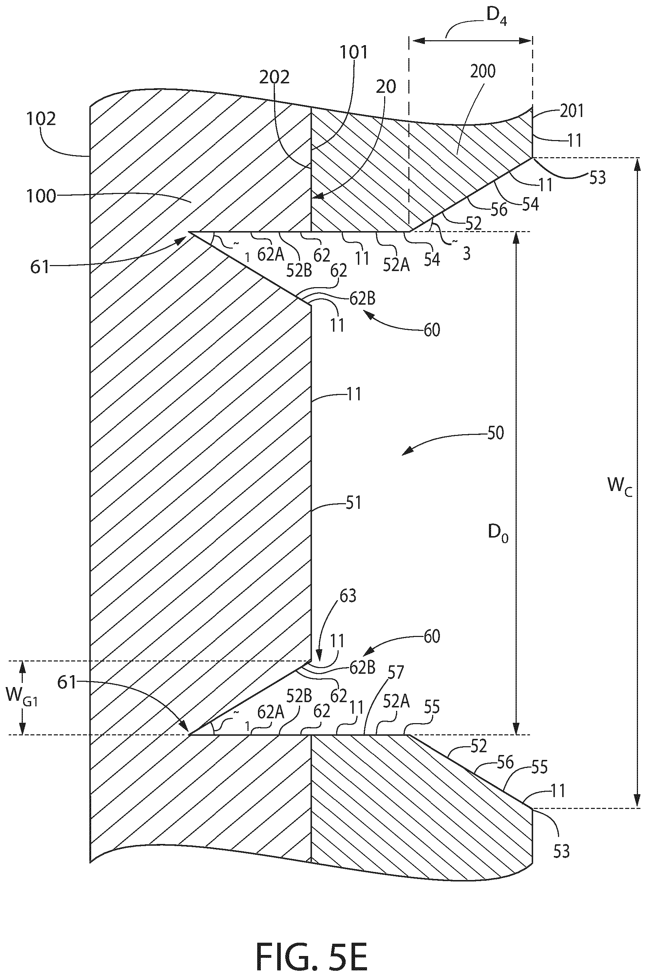

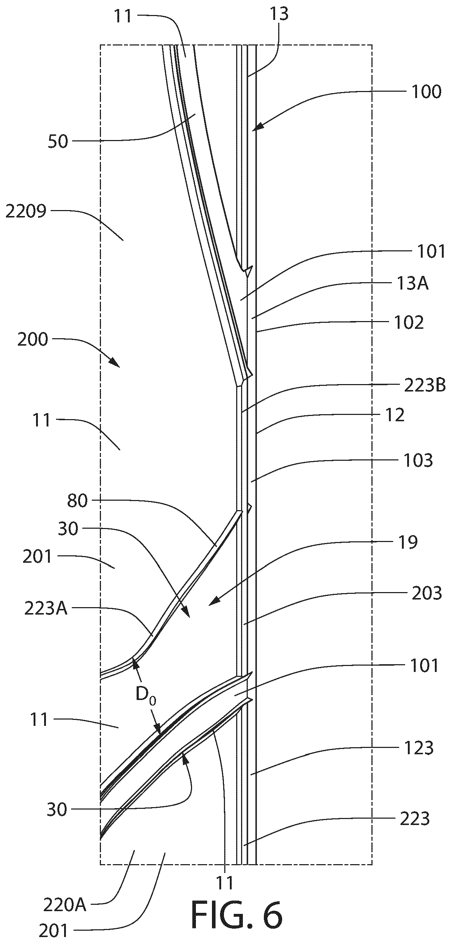

Referring now to FIGS. 1-6, the present invention is directed to a building panel 10. The building panel 10 may be an acoustic building panel 10, as discussed in greater detail herein. The building panel 10 may comprise a first major exposed surface 11 (also referred to as a first major exposed panel surface 11) opposite a second major exposed surface 12 (also referred to as a second major exposed panel surface 12). The building panel 10 may comprise a panel exposed side surface 13 (also referred to as a panel side surface 13) that extends between the first major exposed surface 11 and the second major exposed surface 12 of the building panel 10. The panel side surface 13 may form a perimeter 14 of the building panel 10.

The building panel 10 may have a maximum panel thickness t_{PM} as measured by the distance extending between the uppermost portion 16 of the first major exposed surface 11 and the lowermost portion 17 of the second major exposed surface 12. The maximum panel thickness t_{PM} may range from about 1.0 mm to about 50 mm - including all thicknesses and sub-ranges there-between.

The building panel 10 may comprise a panel aesthetic feature 30 that is formed into the first major exposed surface 11 of the building panel 10. The panel aesthetic feature 30 may be a three-dimensional feature that is formed into the first major exposed surface 11 of the building panel 10 and extend from the uppermost portion 16 of the first major exposed surface to an intermediate portion 18 of the first major exposed surface 11 - whereby the intermediate portion 18 of the first major exposed surface 11 is located between the uppermost portion 16 of the first major exposed surface 11 and the lowermost portion 17 of the second major exposed surface 12. As discussed in greater detail herein, the three-dimensional nature of the panel aesthetic feature 30 may result in the first major exposed surface 11 of the building panel 10 having a varied topography across the entirety of the first major exposed surface 11 within the perimeter of the building panel 10.

The panel aesthetic feature 30 may comprise at least one channel 50. The panel aesthetic feature 30 may comprise at least one groove 80 (also referred to as a top groove 80). In some embodiments, the building panel 10 may comprise a plurality of channels 50. In some embodiments, the building panel 10 may comprise a plurality of grooves 80.

In some embodiments, at least one of the plurality of channels 50 may intersect the side surface 13 of the building panel 10. In some embodiments, at least one of the plurality of channels 50 may intersect the perimeter 14 of the building panel 10. In some embodiments, a plurality of the channels 50 may intersect the side surface 13 of the building panel 10. In some embodiments, a plurality of the channels 50 may intersect the perimeter 14 of the building panel 10.

In some embodiments, at least one of the plurality of grooves 80 may intersect the side surface 13 of the building panel 10. In some embodiments, at least one of the plurality of grooves 80 may intersect the perimeter 14 of the building panel 10. In some embodiments, a plurality of the grooves 80 may intersect the side surface 13 of the building panel 10. In some embodiments, a plurality of the grooves 80 may intersect the perimeter 14 of the building panel 10.

Each of the plurality of channels 50 may comprise a channel opening 53. The building panel 10 may comprise a floor 51 for each of the plurality of channels 50. The building panel 10 may comprise a plurality of walls 52 for each of the plurality of channels 50.

Each of the plurality of grooves 80 may comprise a groove opening 83. The building panel 10 may comprise a floor 81 for each of the plurality of grooves 80. The floor 81 of each plurality of grooves 80 may be an apex. In other embodiments not shown, the floor 81 of each plurality of grooves 80 may be a planar surface. The building panel 10 may comprise a plurality of walls 82 for each of the plurality of grooves 80.

The first major exposed surface 11 of the building panel 10 may comprise the floor 51 of each plurality of channels 50, the wall 52 of each plurality of channels 50, the floor 81 of each plurality of grooves 80, and the wall of each plurality of grooves 80. The intermediate portion 18 of the first major exposed surface 11 of the building panel 10 may comprise the floor 51 of each plurality of channels 50, the wall 52 of each plurality of channels 50, the floor 81 of each plurality of grooves 80, and the wall of each plurality of grooves 80.

The plurality of grooves 80 may comprise a first groove portion 400 and a second groove portion 500. The first groove portion 400 and the second groove portion 500 may be vertically offset from each other along a direction extending between the first major exposed surface 11 to the second major exposed surface 12 of the building panel 10. The second groove portion 500 may be located above the first groove portion 400 in a direction extending between the first major exposed surface 11 to the second major exposed surface 12 of the building panel 10.

The panel side surface 13 may comprise a first side surface 13a opposite a second side surface 13b. The panel side surface 13 may comprise a third side surface 13c opposite a fourth side surface 13d. The first side surface 13a may be substantially parallel to the second side surface 13b. The first side surface 13a may be parallel to the second side surface 13b. The third side surface 13c may be substantially parallel to the fourth side surface 13d. The third side surface 13c may be parallel to the fourth side surface 13d.

The first side surface 13a may intersect the third side surface 13c. The first side surface 13a may intersect the fourth side surface 13d. The second side surface 13b may intersect the third side surface 13c. The second side surface 13b may intersect the fourth side surface 13d.

The first side surface 13a may be substantially orthogonal to the third side surface 13c. The first side surface 13a may be orthogonal to the third side surface 13c. The first side surface 13a may be substantially orthogonal to the fourth side surface 13d. The first side surface 13a may be orthogonal to the fourth side surface 13d.

The second side surface 13b may be substantially orthogonal to the third side surface 13c. The second side surface 13b may be orthogonal to the third side surface 13c. The second side surface 13b may be substantially orthogonal to the fourth side surface 13d. The second side surface 13b may be orthogonal to the fourth side surface 13d.

In some embodiments, at least one of the plurality of channels 50 may intersect at least two of the first side surface 13a, the second side surface 13b, third side surface 13c, and/or fourth side surface 13d of the building panel 10. In a non-limiting embodiment, at least one of the plurality of channels 50 may intersect the first side surface 13a and at least one of the second side surface 13b, third side surface 13c, and/or fourth side surface 13d of the building panel 10. In a non-limiting embodiment, at least one of the plurality of channels 50 may intersect the first side surface 13a, the second side surface 13b, and at least one of the third side surface 13c and/or fourth side surface 13d of the building panel 10. In a non-limiting embodiment, at least one of the plurality of channels 50 may intersect the first side surface 13a, the third side surface 13c, and at least one of the second side surface 13b and/or fourth side surface 13d of the building panel 10. In a non-limiting embodiment, at least one of the plurality of channels 50 may intersect the first side surface 13a, the second side surface 13b, third side surface 13c, and the fourth side surface 13d of the building panel 10.

In some embodiments, at least one of the plurality of grooves 80 may intersect at least two of the first side surface 13a, the second side surface 13b, third side surface 13c, and/or fourth side surface 13d of the building panel 10. In a non-limiting embodiment, at least one of the plurality of grooves 80 may intersect the first side surface 13a and at least one of the second side surface 13b, third side surface 13c, and/or fourth side surface 13d of the building panel 10. In a non-limiting embodiment, at least one of the plurality of grooves 80 may intersect the first side surface 13a, the second side surface 13b, and at least one of the third side surface 13c and/or fourth side surface 13d of the building panel 10. In a non-limiting embodiment, at least one of the plurality of grooves 80 may intersect the first side surface 13a, the third side surface 13c, and at least one of the second side surface 13b and/or fourth side surface 13d of the building panel 10. In a non-limiting embodiment, at least one of the plurality of grooves 80 may intersect the first side surface 13a, the second side surface 13b, third side surface 13c, and the fourth side surface 13d of the building panel 10.

In some embodiments, at least one of the plurality of grooves 80 may extend from the first side surface 13a to at least the second side surface 13b of the building panel 10. In some embodiments, at least one of the plurality of grooves 80 may extend from the third side surface 13c to at least the fourth side surface 13d of the building panel 10. In some embodiments, at least one of the plurality of grooves 80 may extend from the first side surface 13a to at least the third side surface 13c of the building panel 10. In some embodiments, at least one of the plurality of grooves 80 may extend from the first side surface 13a to at least the fourth side surface 13d of the building panel 10. In some embodiments, at least one of the plurality of grooves 80 may extend from the second side surface 13b to at least the third side surface 13c of the building panel 10. In some embodiments, at least one of the plurality of grooves 80 may extend from the second side surface 13b to at least the fourth side surface 13d of the building panel 10. The grooves 80 may extend discontinuously between the respective side surfaces 13, 13a, 13b, 13c, 13d. In other embodiments, the grooves 80 may extend continuously between the respective side surfaces 13, 13a, 13b, 13c, 13d.

The phrase "extend continuously" with respect to the plurality of grooves 80 may refer one or more grooves 80 extending between a start point and an end point (e.g., panel side surfaces 13, 13a, 13b, 13c, 13d), whereby the one or more grooves 80 consists of the second groove portion 500 and does not transition to a first groove portion 400. The phrase "extend discontinuously" with respect to the plurality of grooves 80 may refer one or more grooves 80 extending between a start point and an end point (e.g., panel side surfaces 13, 13a, 13b, 13c, 13d), whereby the one or more grooves 80 transitions between a second groove portion 500 and a first groove portion 400.

In some embodiments, at least one of the plurality of channels 50 may extend continuously from the first side surface 13a to at least the second side surface 13b of the building panel 10. In some embodiments, at least one of the plurality of channels 50 may extend continuously from the third side surface 13c to at least the fourth side surface 13d of the building panel 10. In some embodiments, at least one of the plurality of channels 50 may extend continuously from the first side surface 13a to at least the third side surface 13c of the building panel 10. In some embodiments, at least one of the plurality of channels 50 may extend continuously from the first side surface 13a to at least the fourth side surface 13d of the building panel 10. In some embodiments, at least one of the plurality of channels 50 may extend continuously from the second side surface 13b to at least the third side surface 13c of the building panel 10. In some embodiments, at least one of the plurality of channels 50 may extend continuously from the second side surface 13b to at least the fourth side surface 13d of the building panel 10. At least one of the plurality of channels 50 may extend continuously between panel side surface 13.

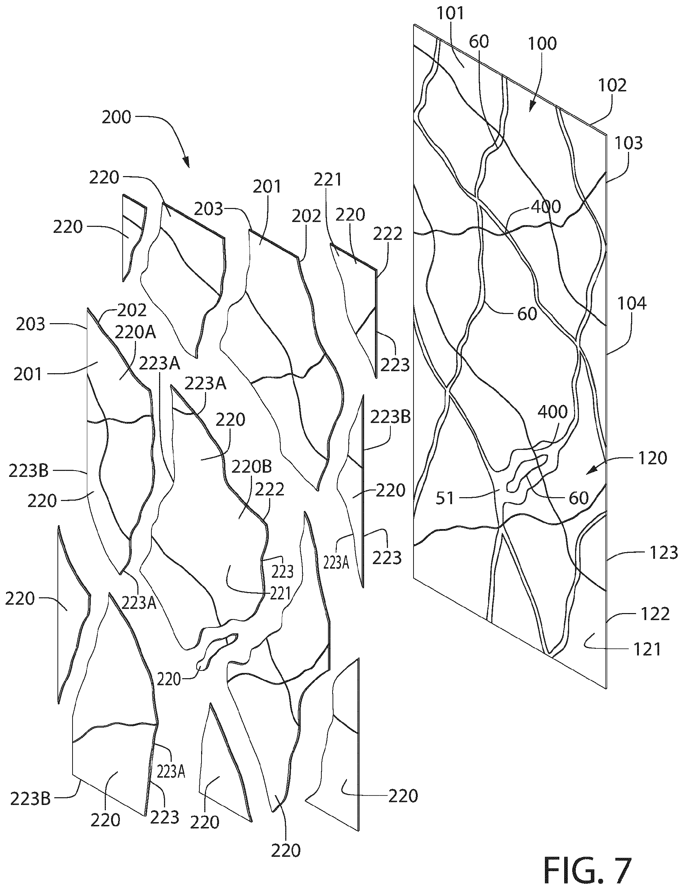

Referring now to FIGS. 1-7, the building panel 10 may comprise a first layer 100 and a second layer 200. The second layer 200 may be positioned atop the first layer 100. The second layer 200 may be positioned directly atop the first layer 100. An interface 20 may exist between the first layer 100 and the second layer 200.

The first layer 100 may comprise a first major surface 101 opposite a second major surface 102. The first layer 100 may comprise a first layer side surface 103 extending between the first major surface 101 and the second major surface 102 of the first layer 100. The first layer side surface 103 may form a perimeter 104 of the first layer 100.

The first layer 100 may have a first layer thickness t₁ as measured between the first major surface 101 and the second major surface 102 of the first layer 100. The first layer thickness t₁ may range from about 1 mm to about 24 mm - including all thicknesses and sub-ranges there-between.

The second layer 200 may comprise a first major surface 201 opposite a second major surface 202. The second layer 200 may comprise a second layer side surface 203 extending between the first major surface 201 and the second major surface 202 of the second layer 200. The second layer side surface 203 may form a perimeter 204 of the second layer 200.

The second layer 200 may have a second layer thickness t₂ as measured between the first major surface 201 and the second major surface 202 of the second layer 200. The second layer thickness t₂ may range from about 1 mm to about 24 mm - including all thicknesses and sub-ranges there-between.

In some embodiments, the maximum panel thickness t_{PM} may be substantially equal to the summation of the first layer thickness t₁ and the second layer thickness t₂.

The first layer 100 and the second layer 200 may be positioned such that the first major surface 101 of the first layer 100 may face the second major surface 202 of the second layer 200. The interface 20 may exist between the first major surface 101 of the first layer 100 and the second major surface 202 of the second layer 200.

In some embodiments, adhesive may be present in the interface 20. The adhesive 20 present in the interface 20 may secure the first layer 100 and the second layer 200 together to form the building panel 10. The adhesive may be present in a thickness ranging from about 0.05 mm to about 0.15 mm - including all amounts and sub-ranges there-between. Non-limiting examples of adhesive may include pressure sensitive adhesive.

The first major exposed surface 11 of the building panel 10 may comprise the first major surface 201 of the second layer 200. The second major exposed surface 12 of the building panel 10 may comprise the second major surface 102 of the first layer 100. The panel side surface 13 of the building panel 10 may comprise the first layer side surface 103 of the first layer and the second layer side surface 203 of the second layer 200.

The first layer 100 may comprise a first body 120. The first body 120 may comprise an upper surface 121 opposite a lower surface 122 and a first body edge 123 extending between the upper surface 121 and the lower surface 122 of the first body 120. The first body edge 123 may overlap with the first layer side surface 103 of the first layer 100. The first body edge 123 may overlap with the perimeter 104 of the first layer 100.

The first body 120 may be integrally formed. The first body 120 may comprise a first fibrous material. The first fibrous material may be selected from an inorganic fiber, an organic fiber, and combinations thereof. In a non-limiting embodiment, the inorganic fiber may be selected from mineral fiber, felt fiber, and combinations thereof. The first fibrous material may be selected from an inorganic fiber, an organic fiber, and combinations thereof. In a non-limiting embodiment, the inorganic fiber may be selected from mineral fiber, felt fiber, and combinations thereof. Other non-limiting examples of inorganic fiber include fiberglass, mineral wool (also referred to as slag wool), rock wool, stone wool, and glass fibers (fiberglass). Non-limiting examples of organic fiber include cellulosic fibers (e.g. paper fiber - such as newspaper, hemp fiber, jute fiber, flax fiber, wood fiber, or other natural fibers), polymer fibers (including polyester, polyethylene, aramid - i.e., aromatic polyamide, and/or polypropylene), protein fibers (e.g., sheep wool), and combinations thereof.

In a non-limiting embodiment, the first fibrous material may be a felt fiber. In some embodiments, the first body 120 may further comprise one or more binders and/or fillers with the fibrous material. The first body 120 may have a first weight per area ranging from about 1,500 g/m² to about 2,500 g/m² - including all densities and sub-ranges there-between. In some embodiments, the first weight per area may be about 1,900 g/m².

Non-limiting examples of binder may include a starch-based polymer, polyvinyl alcohol (PVOH), a latex, polysaccharide polymers, cellulosic polymers, protein solution polymers, an acrylic polymer, polymaleic anhydride, polyvinyl acetate, epoxy resins, or a combination of two or more thereof.

Non-limiting examples of filler may include powders of calcium carbonate, including limestone, titanium dioxide, sand, barium sulfate, clay, mica, dolomite, silica, talc, perlite, polymers, gypsum, wollastonite, expanded-perlite, calcite, aluminum trihydrate, pigments, zinc oxide, or zinc sulfate.

In non-limiting embodiments, the first layer 100 may further comprise one or more additives include defoamers, wetting agents, biocides, dispersing agents, flame retardants, and the like.

The first layer side surface 103 may be continuous. The perimeter 104 of the first layer 100 may be continuous.

The second layer 200 may comprise a plurality of second bodies 220. The second layer 200 may comprise a plurality of the first ones 220a of the second bodies 220. The second layer 200 may comprise a plurality of the second ones 220b of the second bodies 220.

Each of the second bodies 220 may comprise a second fibrous material. The second fibrous material may be selected from an inorganic fiber, an organic fiber, and combinations thereof. In a non-limiting embodiment, the inorganic fiber may be selected from mineral fiber, felt fiber, and combinations thereof. Other non-limiting examples of inorganic fiber include fiberglass, mineral wool (also referred to as slag wool), rock wool, stone wool, and glass fibers (fiberglass). Non-limiting examples of organic fiber include cellulosic fibers (e.g. paper fiber - such as newspaper, hemp fiber, jute fiber, flax fiber, wood fiber, or other natural fibers), polymer fibers (including polyester, polyethylene, aramid - i.e., aromatic polyamide, and/or polypropylene), protein fibers (e.g., sheep wool), and combinations thereof.

In a non-limiting embodiment, the second fibrous material may be a felt fiber. In some embodiments, the second body 220 may further comprise one or more binders and/or fillers with the fibrous material. The second body 220 may have a second weight per area ranging from about 1,500 g/m² to about 2,500 g/m² - including all densities and sub-ranges there-between. In some embodiments, the second weight per area may be about 1,900 g/m².

Non-limiting examples of binder may include a starch-based polymer, polyvinyl alcohol (PVOH), a latex, polysaccharide polymers, cellulosic polymers, protein solution polymers, an acrylic polymer, polymaleic anhydride, polyvinyl acetate, epoxy resins, or a combination of two or more thereof.

Non-limiting examples of filler may include powders of calcium carbonate, including limestone, titanium dioxide, sand, barium sulfate, clay, mica, dolomite, silica, talc, perlite, polymers, gypsum, wollastonite, expanded-perlite, calcite, aluminum trihydrate, pigments, zinc oxide, or zinc sulfate.

In non-limiting embodiments, the second layer 200 may further comprise one or more additives include defoamers, wetting agents, biocides, dispersing agents, flame retardants, and the like.

Each of the second bodies 220 may comprise an upper surface 221 opposite a lower surface 222 and a second body edge 223 extending between the upper surface 221 and the lower surface 222 of the respective second body 220. Each of the plurality of second bodies 220 may be discretely formed integral bodies that are separate from each other by an spacing distance D_{O}. The spacing distance D_{O} is a positive, non-zero value. The spacing distance D_{O} is the distance extending between the second body edge 223 of two adjacent-most second bodies 220. The spacing distance D_{O} may range from about 1 inch cm to about 3 inches - including all distances and sub-ranges there-between.

The spacing distance D_{O} may vary along a span (I-I, II-II) that extends between adjacent ones of the second bodies 220. In a non-limiting embodiment, the spacing distance D_{O} may vary along the span between second body edges 223 of two first ones 220a of the second bodies 220. In a non-limiting embodiment, the spacing distance D_{O} may vary along the span between second body edges 223 of two second ones 220b of the second bodies 220. In a non-limiting embodiment, the spacing distance D_{O} may vary along the span between second body edges 223 of a first ones 220a and a second one 220b of the second bodies 220.

In a non-limiting embodiment, the plurality of second bodies 220 may comprise at least a first one 220a of the second bodies 220 and at least a second one 220b of the second bodies 220. The first one 220a of the second bodies 220 may at least partially overlap with the perimeter 204 of the second layer 200. The second one 220b of the second bodies 220 may not overlap with the perimeter 204 of the second layer 200. Stated otherwise, the second one 220b of the second bodies 220 may be inset from the perimeter 204 of the second layer 200 by a positive, non-zero value. In some embodiments, the second layer 200 comprises a plurality of the first ones 220a of the second bodies 220. In some embodiments, the second layer 200 comprises a plurality of the second ones 220b of the second bodies 220.

The second body edge 223 of the first one 220a of the second body 220 may comprise an interior edge portion 220a and an exterior edge portion 223b. The exterior edge portion 223b of each first one 220a of the second bodies 220 may overlap with the perimeter 204 of the second layer 200. The exterior edge portion 223b of each first one 220a of the second bodies 220 may form the perimeter 204 of the second layer 200. The interior edge portion 223a of each first one 220a of the second bodies 220 may not overlap with the perimeter 204 of the second layer 200. Stated otherwise, the interior edge portion 223a of each first one 220a of the second bodies 220 may be inset from the perimeter 204 of the second layer 200 by a positive, non-zero distance.

In some embodiments, the exterior edge portion 223b of the first one 220a of the second bodies 220 may be linear in shape. In some embodiments, the exterior edge portion 223b may a non-curved shape. In some embodiments, the first one 220a of the second bodies 220 may comprise a single exterior edge portion 223b that is linear in shape. In some embodiments, the first one 220a of the second bodies 220 may comprise a two exterior edge portions 223b oriented orthogonal to each other. In some embodiments, the interior edge portion 223a of the first one 220a of the second bodies 220 may be curved in shape.

The second body edge 223 of the at least second one 220b of the second bodies 220 may comprise an interior edge portion 220a. The second body edge 223 of the second one 220b of the second body 220 may include only an interior edge portion 220a. The interior edge portion 223a of each second one 220b of the second bodies 220 may not overlap with the perimeter 204 of the second layer 200. Stated otherwise, the interior edge portion 223b of each second one 220b of the second bodies 220 may be inset from the perimeter 204 of the second layer 200 by a positive, non-zero distance. In some embodiments, the interior edge portion 223a of the second one 220b of the second bodies 220 may be curved in shape.

In some embodiments, the second layer 200 may comprise a plurality of first ones 220a of the second bodies 220, whereby the exterior edge portions 223b of the first ones 220a of the second bodies 220 create second layer side surface 203 of the second layer 200. In such embodiments, the first ones 220a of the second bodies 220 are horizontally spaced from each other along the perimeter 204 by the spacing distance D_{O} to create a gap 19 between adjacent first ones 220a of the second bodies 220 located along the second layer side surface 203 of the second layer 200. The perimeter 204 of the second layer 200 may be discontinuous due to the presence of the gaps 19 created by the spacing distance D_{O} between adjacent first ones 220a of the second bodies 220 along the second layer side surface 203.

A first portion 101a of the first major surface 101 of the first layer 100 may exist that is uncovered by the second layer 200. The first portion 101a of the first major surface 101 of the first layer 100 that is uncovered by the second layer 200 may form at least part of the first major exposed surface 11 of the building panel 10. The first portion 101a of the first major surface 101 of the first layer 100 that is uncovered by the second layer 200 may form at least part of the intermediate portion 18 of the first major exposed surface 11 of the building panel 10.

The gap 19 existing between adjacent ones of the second bodies 220 may form the first portion 101a of the first major surface 101 of the first layer 100 that remains uncovered by the second layer 200. Stated otherwise, the gap 19 existing between adjacent ones of the second bodies 220 may form a first portion 101a of the first major surface 101 of the first layer 100 that remains uncovered by the second layer 200.

A second portion 101b of the first major surface 101 of the first layer 100 may exist that is covered by the second layer 200. The second portion 101b of the first major surface 101 of the first layer 100 that is covered by the second layer 200 may form at least part of the interface 20 between the first layer 100 and the second layer 200 of the building panel 10. The second portion 101b of the first major surface 101 may face the second major surface 202 of the second layer 200. The second portion 101b of the first major surface 101 may directly face the second major surface 202 of the second layer 200. The second portion 101b of the first major surface of the first layer 100 may exist outside of the gap 19 of the building panel 10.

The first portion 400 of the groove 80 may be formed into the first portion 101a of the first major surface 101 of the first layer 200 with the second portion 500 of the groove 80 may be formed into the first major surface 201 of the second layer 200.

The plurality of grooves 80 formed into the first major exposed surface 11 of the building panel 10 may extend across the first major surface 201 of the second layer 200 and the first portion 101a of the first major surface 101 of the first layer 100. The plurality of grooves 80 formed into the first major exposed surface 11 of the building panel 10 may intersect the first major surface 201 of the second layer 200 and the first portion 101a of the first major surface 101 of the first layer 100.

The plurality of channels 50 may exist in the open volume created by the horizontal spacing between the second bodies 220 in the second layer 200. As discussed in greater detail herein, the channel width may be defined, in part, by the spacing distance D_{O} between adjacent ones of the second bodies 220 in the second layer 200. The channel width may be defined, in part, by the spacing distance D_{O} between adjacent ones of the second bodies 220 in the second layer 200 as measured at the first major surface 201 of the second layer 200.

The floor 51 of each plurality of channels 50 may be formed by the first layer 100. The floor 51 of each plurality of channels 50 may be coplanar with the first major surface 101 of the first layer 100. In some embodiments, the floor 51 of each plurality of channels 50 may comprise the first major surface 101 of the first layer 100. Stated otherwise, the floor 51 of each plurality of channels 50 may be formed by the first major surface 101 of the first layer 100.

Each of the plurality of channels 50 may have a channel depth D₁ as measured by the vertical distance extending from the channel opening 53 to the channel floor 51. The channel depth D₁ may also be measured as the vertical distance spanning from the first major surface 201 of the second layer to the floor 51 of the channel 50.

In some embodiments, the channel depth D₁ may be substantially equal to or greater than the second layer thickness t₂. In some embodiments, the channel depth D₁ may be equal to or greater than the second layer thickness t₂. In some embodiments, the channel depth D₁ may be substantially equal to the second layer thickness t₂. In some embodiments, the channel depth D₁ may be equal to the second layer thickness t₂. The maximum panel thickness t_{PM} may be greater than the channel depth D₁.

Each of the channel openings 53 may have a width W_{C} as measured at the first major surface 201 of the second layer 200. The width W_{C} of the channel opening 53 may depend on the angle of opening Θ₃ as measured up from the bottom portion 57 of the upper lower portion 52b of the wall 52. The angle of opening Θ₃ may range from about 5° to about 45° - including all angles and sub-ranges there-between. In some embodiments, the angle of opening Θ₃ may be about 30°.

In some embodiments, the width W_{C} of the channel opening 53 may be greater than the spacing distance D_{O} (not shown in the figures). In such embodiments, the channel openings 53 may comprise a setback element 56 (also referred to as an "edge feature" 56) to allow for the channel opening 53 to be bigger than the spacing distance D_{O}. In a non-limiting embodiment, the setback element 56 may comprise a chamfer, fillet, or the like. In other embodiments, the width W_{C} of the channel opening 53 may be substantially equal to the spacing distance D_{O} (not shown in the figures) - whereby the channel 50 does not comprise a setback element 52a.

The width W_{C} of the channel opening 53 may vary along the span (I-I, II-II) of each respective channel 50. In such embodiments, the first channel wall 54 and the second channel wall 55 may extend along the span as non-parallel curves.

The walls 52 of each plurality of channels 50 may be formed at least in part by the second layer 200. The walls 52 of each plurality of channels 50 may comprise the second body edge 223 of the second bodies 220 of the second layer 200. Stated otherwise, the walls 52 of each plurality of channels 50 may be formed at least in part by the second body edge 223 of the second bodies 220 of the second layer. The walls 52 of each plurality of channels 50 may comprise the interior edge portion 223a of the second body edge 223 of the second bodies 220 of the second layer 200. Stated otherwise, the walls 52 of each plurality of channels 50 may be formed at least in part by the interior edge portion 223a of the second body edge 223 of the second bodies 220 of the second layer 200.

The walls 52 of the plurality of channels 50 may comprise a first channel wall 54 opposite a second channel wall 55. The distance between the first channel wall 54 and the second channel wall 55 may be equal to the spacing distance D_{O}.

Each of the walls 52 of the plurality of channels 50 may comprise an upper portion 52a and a lower portion 52b. The upper portion 52a of each wall 52 of the plurality of channels 50 is formed by the second layer 200. The lower portion 52b of each wall 52 of the plurality of channels 50 is formed by the first layer 200. The setback element 56 may be located at the top of the upper portion 52a of each wall 52. The upper portion 52a of the wall 52 may further comprise a bottom portion 57 that is located beneath the setback element 56 along the upper portion 52a of the wall 52.

The setback element 56 may extend downward to a setback depth D₄ (also referred to as an "edge feature depth" D₄) as measured from the first major surface 201 of the second layer 200 to the bottom portion 57 of the upper portion 52a of the wall 52. The setback depth D₄ may range from about 40% to about 60 % of the first layer thickness t₁ - including all percentages and sub-ranges there-between. In some embodiments, the setback depth D₄ may be about 50% of the first layer thickness t₁.

In some embodiments, at least a portion of the upper portion 52a and the lower portion 52b of each wall 52 of each plurality of channels are parallel. In some embodiments, at least a portion of the upper portion 52a and the lower portion 52b of each wall 52 of each plurality of channels are coplanar. As discussed in greater detail herein, at least a portion of the upper portion 52a and the lower portion 52b of each wall 52 being coplanar allow the first layer 100 and the second layer 200 to align relative to each other.

In some embodiments, the bottom portion 57 of the upper portion 52a of the wall 52 and the lower portion 52b of the wall 52 are parallel. In some embodiments, the bottom portion 57 of the upper portion 52a of the wall 52 and the lower portion 52b of the wall 52 are coplanar. As discussed in greater detail herein, the bottom portion 57 of the upper portion 52a of the wall 52 and the lower portion 52b of the wall 52 being coplanar allow the first layer 100 and the second layer 200 to align relative to each other.

According to the embodiments with the channel openings 53 comprising the setback element 56, the lower portion 52b of each wall 52 may be oblique to the setback element 56 of upper portion 52a of the wall 52. In such embodiments, the upper portion 52a of the wall 52 may comprise the bottom portion 57 of the upper portion 52a of the wall 52 being parallel to the lower portion 52b of the wall 52 and the setback element 56 of the upper portion 52a of the wall 52 being oblique to the bottom portion 52b of the wall 52. In such embodiments, the upper portion 52a of the wall 52 may comprise the bottom portion 57 of the upper portion 52a of the wall 52 being coplanar to the lower portion 52b of the wall 52 and the setback element 56 of the upper portion 52a of the wall 52 being oblique to the bottom portion 52b of the wall 52.

The building panel 10 may further comprise a plurality of channel grooves 60. The channel grooves 60 may extend into the floor 51 of each channel 50 to a channel groove floor 61. The channel groove floor 61 may be an apex. In other embodiments not shown, the channel groove floor 61 may be a flat surface. The building panel 10 may further comprise a plurality of channel groove walls 62 that extend from the channel floor 51 to a channel groove floor 61. The channel groove 60 may comprise an opening 63 located at the first major surface 101 of the first layer 100.

The channel groove walls 62 may comprise an outer channel groove wall 62a opposite an inner channel groove wall 62b. The outer channel groove wall 62a and the inner channel groove wall 62b both intersect the channel groove floor 61.

The channel groove 60 may have a channel groove width W_{G1} as measured at the opening 63 of the channel groove 60. The channel groove width W_{G1} may depend on the interior channel groove angle Θ₁. The channel groove width W_{G1} may be substantially constant along the span of each respective channel groove 80.

The inner channel groove wall 62b may extend downward and outward from the floor 51 of the channel 50 to the channel groove floor 61. The outer channel groove wall 62a may extend downward from the first major surface 101 of the first layer 100 to the channel groove floor 61. An interior channel groove angle Θ₁ may be formed between the inner channel groove wall 62b and the outer channel groove wall 62a - whereby the interior channel groove angle Θ₁ may range from about 5° to about 45° - including all angles and sub-ranges there-between. In some embodiments, the interior channel groove angle Θ₁ may be about 30°.

The outer channel groove wall 62a may be substantially orthogonal to the floor 51 of each the channel 50. The outer channel groove wall 62a may be substantially orthogonal to the first major surface 101 of the first layer 100. The inner channel groove wall 62b may extend outward and downward from the floor 51 at an angle that is equal to 360° - (90° + Θ₁).

Each of the plurality of channel grooves 60 may have a channel groove depth D₃ as measured by the vertical distance extending from the channel floor 51 to the channel groove floor 61. The channel groove depth D₃ may range from about 33 % to about 66 % of the first layer thickness t₁ - including all percentages and sub-ranges there-between. In some embodiments, the channel groove depth D₃ may be about 50 % of the first layer thickness t₁.

The lower portion 52b of the walls 52 of the plurality of channels 50 may comprise the outer channel groove wall 62a. Stated otherwise, the lower portion 52b of the walls 52 of the plurality of channels 50 may be formed by the outer channel groove wall 62a. The lower portion 52b of the walls 52 of the plurality of channels 50 may be formed by the first layer 100.

With the lower portion 52b of the wall 52, which is formed of the first layer 100, and the upper portion 52a of the wall 52, which is formed of the second layer 200, being coplanar, the resulting wall geometries provide for an alignment mechanism when joining the first layer 100 and the second layers 200 together. Specifically, with the lower portion 52b of the wall 52, which is formed of the first layer 100, and the upper portion 52a of the wall 52, which is formed of the second layer 200, being coplanar, the resulting wall geometries provide for an alignment mechanism when joining the discrete second bodies 220, which form the second layer, to the first layer 100.

The plurality of grooves 80 may be formed into the first major exposed surface 11 of the building panel 10. Each of the plurality of grooves 80 may comprise an opening 83 located at the first major surface 201 of the second layer 200. A plurality of groove walls 82 may extend downward from the opening 83 of each respective groove 80. The plurality of groove walls may include a first groove wall 82a opposite a second groove wall 82b. An interior groove angle Θ₂ may be formed between the groove walls 82 may range from about 10° to about 90° - including all angles and sub-ranges there-between.

Although not pictured, both the first portion 400 of the plurality of grooves 80 may have the interior groove angle Θ₂ as well as the second portion 500 of the plurality of grooves 80.

The plurality of groove walls 82 may extend downward from the opening 83 of each respective groove 80. The plurality of groove walls may include a first groove wall 82a opposite a second groove wall 82b.

Each of the grooves 80 may comprise a top groove width W_{G2} as measured by the distance spanning from the first groove wall 82 to the second groove wall 82b as measured at the opening 83 of the respective groove 80. The top groove width W_{G2} may depend on the interior groove angle Θ₂.

The top groove width W_{G2} may be substantially constant along the span of each respective groove 80. In such embodiments, the first groove wall 82a and the second groove wall 82b located at the groove openings 83 may extend as parallel curves.

The width W_{C} of the channel opening 53 may be greater than the top groove width W_{G2}. The spacing distance D_{O} may be greater than the top groove width W_{G2}.

A width ratio may exist between the spacing distance D_{O} and the top groove width W_{G2}. The width ratio may range from about 5:1 to about 25:1 - including all ratios and sub-ranges there-between. The width ratio may range from about 6:1 to about 21:1 - including all ratios and sub-ranges there-between

The groove 80 may be independently formed into the second layer 200. The groove 80 may be independently formed into the first layer 100. The first portion 400 of the groove 80 may be formed into the first layer 100. The second portion 500 of the groove 80 may be formed into the second layer 200.

The floor 81 of each second portion 500 of the grooves 80 may be formed by the second layer 200. The floor 81 of the second portion 500 of the grooves 80 may be located between the first major surface 201 and the second major surface 202 of the second layer 200. The floor 81 of each first portion 400 of the grooves 80 may be formed by the first layer 100. The floor 81 of the first portion 400 of the grooves 80 may be located between the first major surface 101 and the second major surface 102 of the first layer 100.

Each of the plurality of grooves 80 may have a groove depth D₂ as measured by the vertical distance extending from the groove opening 83 to the groove floor 81. The groove depth D₂ may range from about 33% to about 66 % of the first layer thickness t₁ - including all percentages and sub-ranges there-between. In some embodiments, the groove depth D₂ may be about 50% of the first layer thickness t₁ - including all percentages and sub-ranges there-between.

For the first portion 400 of the groove 80, the groove depth D₂ may also be measured as the vertical distance spanning from the first major surface 101 of the first layer 100 to the floor 81 of the respective first portion 400 of the groove 80. For the second portion 500 of the groove 80, the groove depth D₂ may also be measured as the vertical distance spanning from the first major surface 201 of the second layer to the floor 81 of the groove 80 of the respective second portion 500 of the groove 80.

The groove depth D₂ for the first portion 400 of the groove 80 may be substantially equal to the groove depth D₂ for the second portion 500 of the groove 80. The groove depth D₂ for the first portion 400 of the groove 80 may be equal to the groove depth D₂ for the second portion 500 of the groove 80. In other embodiments, the groove depth D₂ for the first portion 400 and the second portion 500 of the groove 80 may be different.

In some embodiments, groove depth D₂ for the second portion 500 of the groove 80 may be less than the second layer thickness t₂. In some embodiments, groove depth D₂ for the first portion 400 of the groove 80 may be less than the first layer thickness t₁. In some embodiments, the groove depth D₂ may be less than the channel depth D₁. In some embodiments, the groove depth D₂ may be less than the channel groove depth D₃.

The first layer 100 may exhibit a first visual characteristic. The second layer 200 may exhibit a second visual characteristic. The first visual characteristic of the first layer 100 and the second visual characteristic of the second layer 200 may be different. In an alternative embodiment, the first visual characteristic of the first layer 100 and the second visual characteristic of the second layer 200 may be the same.

The term "visual characteristic" may refer to any trait discernable to the naked eye. In a non-limiting embodiment, the visual characteristics may refer to color, texture, and combinations thereof. In some embodiments, the visual characteristics may refer to color.

The first visual characteristic of the first layer 100 may be a first color and the second visual characteristic of the second layer 200 may be a second color - whereby the first visual characteristic and the second visual characteristic are different. The term "different" with respect to the color visual characteristic may refer to different color values on an L*a*b color value scale. In particular, the color values of the first color and the second color may be sufficiently different such that a difference in color may be discernable to the naked eye. In a non-limiting example, two shades of the same overall color (e.g., light green and dark green) may still constitute different colors even though both would qualify as the color green.

The plurality of grooves 80 may comprise both the first visual characteristics and the second visual characteristics. The first portion 400 of the grooves 80, which are formed into the first layer 100, may comprise the first visual characteristics. The first portion 400 of the grooves 80, which are formed into the first portion 101a of the first major surface 101 of the first layer 100, may comprise the first visual characteristics. The second portion 500 of the grooves 80, which are formed into the second layer 500, may comprise the second visual characteristics. The second portion 500 of the grooves 80, which are formed into the first major surface 201 of the second layer 200, may comprise the first visual characteristics.

The plurality of channels 50 may comprise both the first visual characteristics and the second visual characteristics. The floor 51 of the channels 50, which are formed by the first layer 100, may comprise the first visual characteristics. The floor 51 of the channels 50, which are formed into the first portion 101a of the first major surface 101 of the first layer 100, may comprise the first visual characteristics. The channel grooves 60, which are formed by the first layer 100, may comprise the first visual characteristics. The channel grooves 60, which are formed into the first portion 101a of the first major surface 101 of the first layer 100, may comprise the first visual characteristics.

The upper portion 52a of the walls 52 of the channels 50 may comprise the second visual characteristics. The setback element 56 and the bottom portion 57 of the upper portion 52a of the walls 52 of the channels 50 may comprise the second visual characteristics. The lower portion 52b of the walls 52 of the channels 50 may comprise the second visual characteristics. The lower portion 52b of the walls 52 that overlap with the outer channel groove wall 62a may comprise the first visual characteristics.

The building panel 10 may have an overall length Lp and width Wp. In some embodiments, the length Lp of the building panel 10 may range from 12 inches to 96 inches - including all lengths and sub-ranges there-between. In a non-limiting example, the length Lp of the building panel 10 may be 12, 18, 24, 30, 48, 60, 72, or 96 inches. In some embodiments, the width Wp of the building panel 10 may range from 4 to 48 inches - including all widths and sub-ranges there-between. In a non-limiting example, the building panel 10 may have a width Wp of 4, 6, 12, 18, 20, 24, 30, or 48 inches.

The first layer 100 may be air-permeable - such that the first body 120 is porous and allow for sufficient airflow through the first majro surface 101 and the second major surace 102.

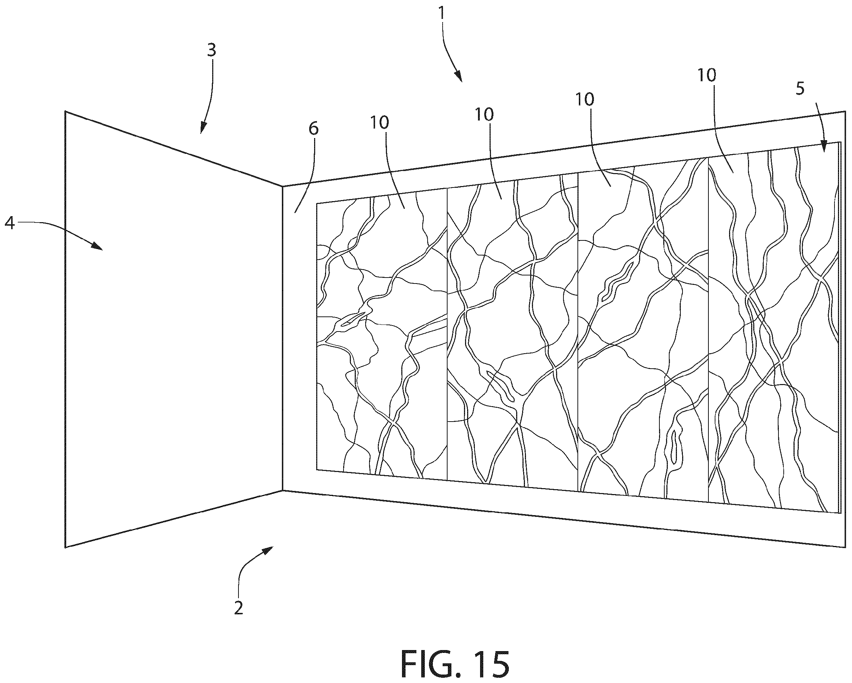

The second layer 200 may be air-permeable - such that the second bodies 220 are porous and allow for sufficient airflow through the first major surface 201 and the second major surface 202. The airflow of the first layer 100 and second layer 200 may allow for the resulting building panel 10 to function as an acoustic building panel 10 by reducing the amount of reflected sound in a room environment of a building system 1 (see FIG. 15).

The reduction in amount of reflected sound in a room is expressed by a Noise Reduction Coefficient (NRC) rating as described in American Society for Testing and Materials (ASTM) test method C423. This rating is the average of sound absorption coefficients at four ⅓ octave bands (250, 500, 1000, and 2000 Hz), where, for example, a system having an NRC of 0.90 has about 90% of the absorbing ability of an ideal absorber. A higher NRC value indicates that the material provides better sound absorption and reduced sound reflection.

The building panel 10 of the present invention may exhibits an NRC of at least about 0.2 as measured between the first and second major exposed surfaces 11, 12. In some embodiments, the building panel 10 of the present invention may have an NRC ranging from about 0.2 to about 0.4 - including all value and sub-ranges there-between. In some embodiments, the building panel 10 of the present invention may have an NRC ranging from about 0.25 to about 0.35 - including all value and sub-ranges there-between. In some embodiments, the building panel 10 of the present invention may have an NRC of about 0.3.

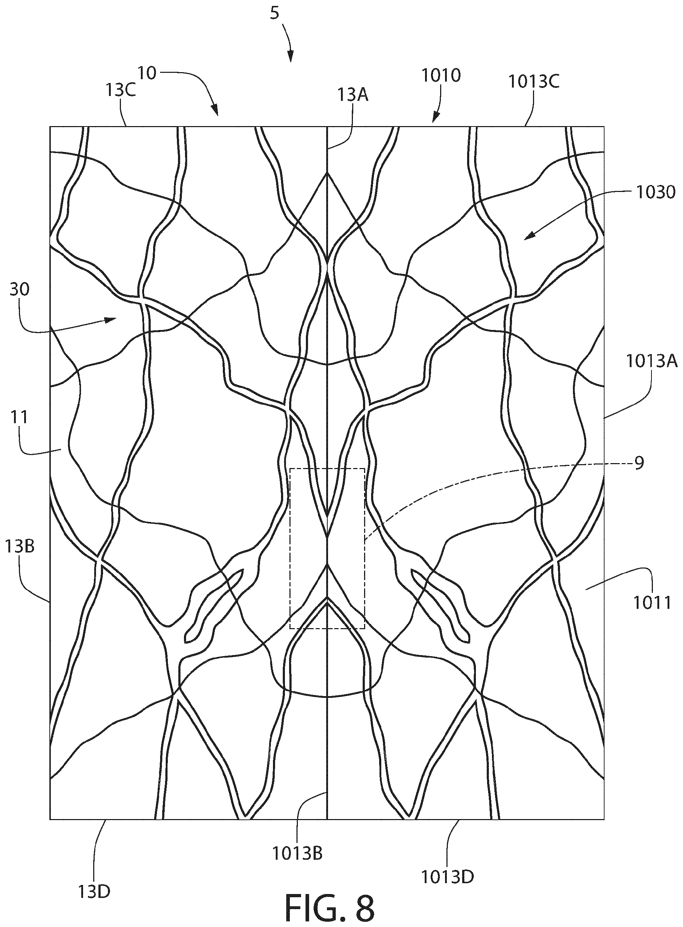

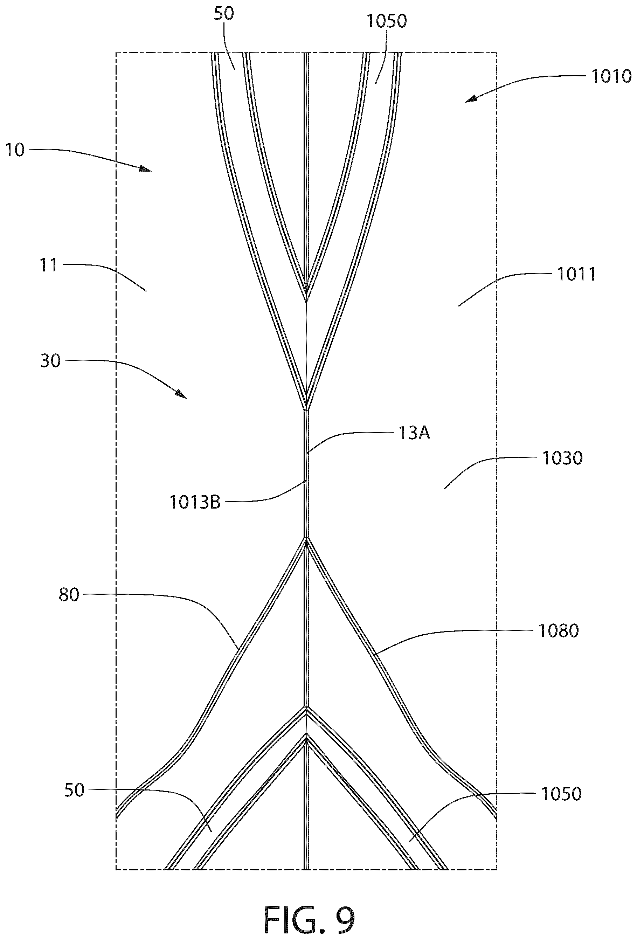

Referring now to FIGS. 8 and 9, the present invention also provides for a building panel assembly 5 comprising at least a first building panel 10 and a second building panel 1010. Other than the differences described herein, the second building panel 1010 is identical to the first building panel 10 previously described herein, except that a 1000-series of number will be used.

The building panel assembly 5 includes positioning the first building panel 10 adjacent to the second building panel 1010, such that at least one of the side surface 13 of the first building panel 10 is immediately adjacent to at least one of the side surfaces 1013 of the second building panel 1010. In a non-limiting embodiment, the first side surface 13a of the first building panel 10 is immediately adjacent to the second side surface 1013b of the second building panel 1010. The panel aesthetic feature 1030 of the second building panel 1010 may a mirror of the panel aesthetic feature 30 of the first building panel 10 - thereby creating a book-matched configuration across the entirety of the first major exposed surface 11, 1011 of the building panels 10, 1011 of the building panel assembly 5.

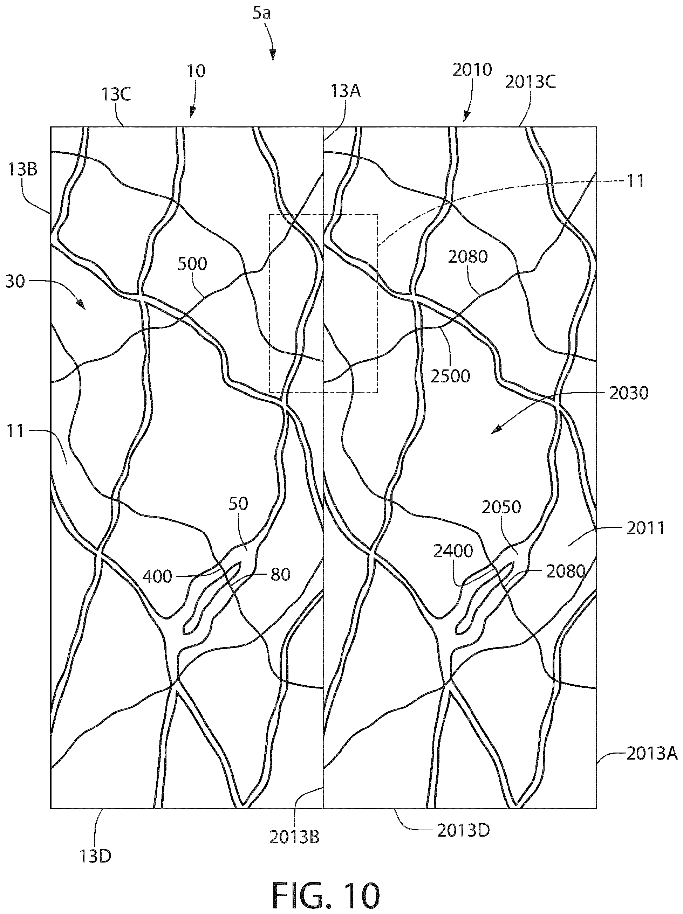

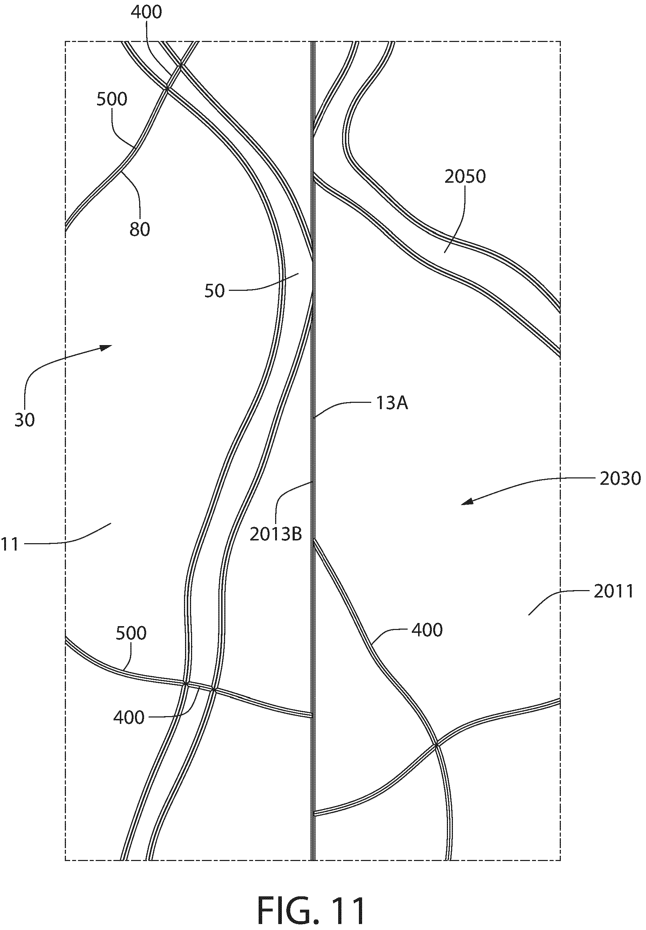

Referring now to FIGS. 10 and 11, the present invention also provides for a building panel assembly 5a comprising at least a first building panel 10 and a second building panel 2010. Other than the differences described herein, the second building panel 2010 is identical to the first building panel 10 previously described herein, except that a 2000-series of number will be used.

The building panel assembly 5a includes positioning the first building panel 10 adjacent to the second building panel 2010, such that at least one of the side surface 13 of the first building panel 10 is immediately adjacent to at least one of the side surfaces 2013 of the second building panel 2010. In a non-limiting embodiment, the first side surface 13a of the first building panel 10 is immediately adjacent to the second side surface 2013b of the second building panel 1010. The panel aesthetic feature 2030 of the second building panel 1010 may be the same as the panel aesthetic feature 30 of the first building panel 10 - thereby creating a slip-matched configuration across the entirety of the first major exposed surface 11, 2011 of the building panels 10, 2011 of the building panel assembly 5a.

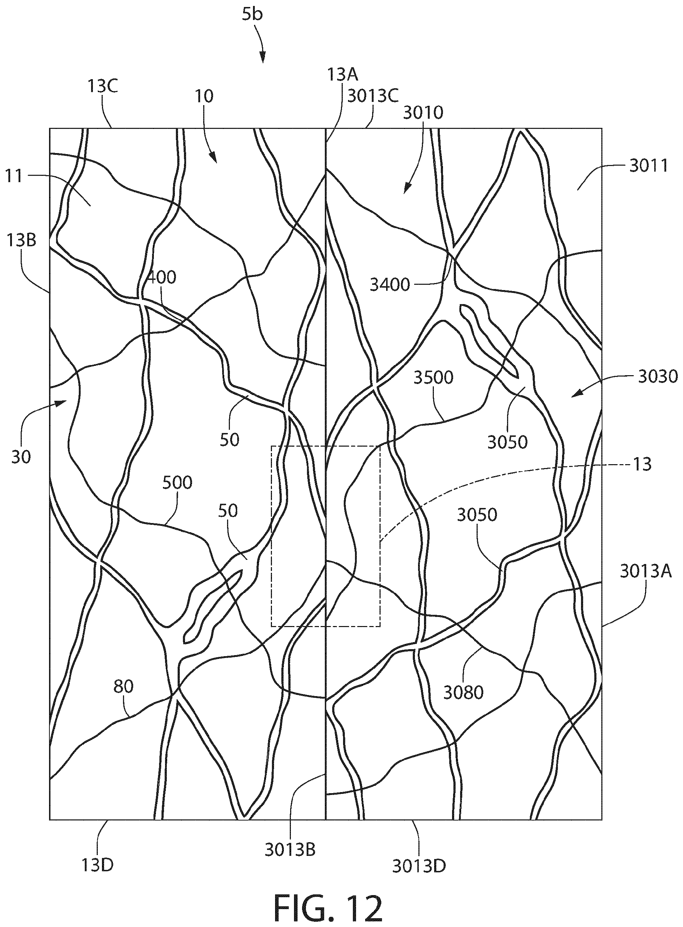

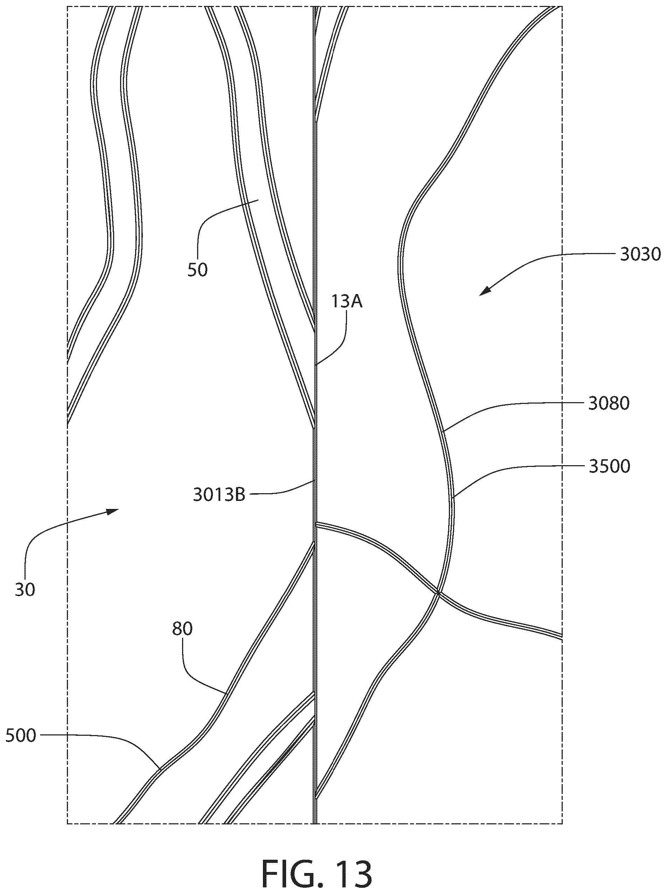

Referring now to FIGS. 12 and 13, the present invention also provides for a building panel assembly 5b comprising at least a first building panel 10 and a second building panel 3010. Other than the differences described herein, the second building panel 3010 is identical to the first building panel 10 previously described herein, except that a 3000-series of number will be used.

The building panel assembly 5b includes positioning the first building panel 10 adjacent to the second building panel 3010, such that at least one of the side surface 13 of the first building panel 10 is immediately adjacent to at least one of the side surfaces 3013 of the second building panel 3010. In a non-limiting embodiment, the first side surface 13a of the first building panel 10 is immediately adjacent to the second side surface 3013b of the second building panel 3010. The panel aesthetic feature 3030 of the second building panel 1010 may be rotated 180° of the aesthetic feature 30 of the first building panel 10 - thereby creating a reverse slip-matched configuration across the entirety of the first major exposed surface 11, 3011 of the building panels 10, 3011 of the building panel assembly 5b.

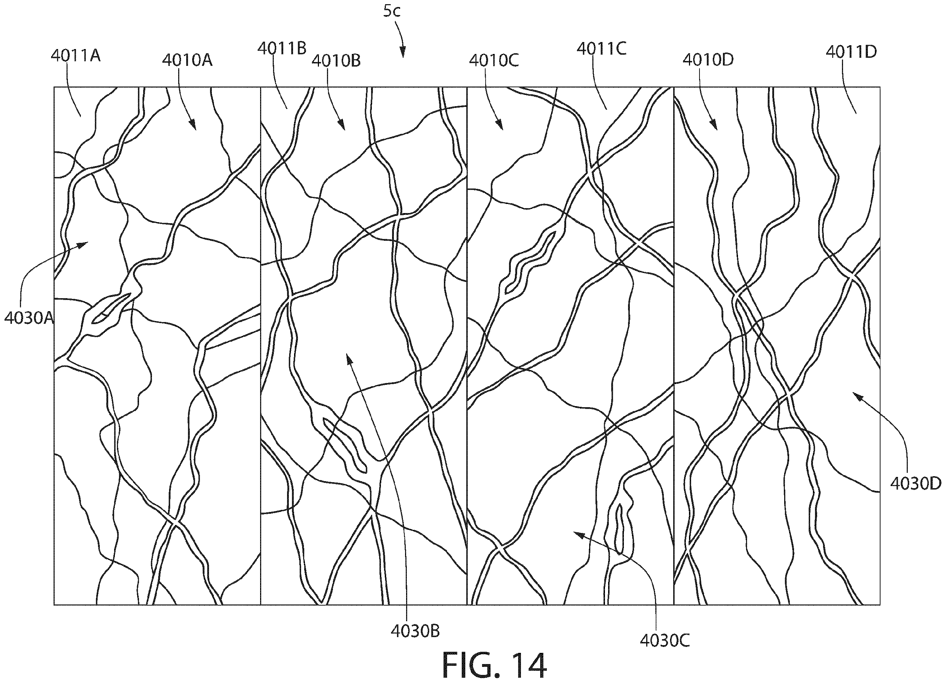

Referring now to FIG. 14, the present invention also provides for a building panel assembly 5c comprising at least a first building panel 4010a, a second building panel 4010b, a third building panel 4010c, and a fourth building panel 4010d. Other than the differences described herein, the first building panel 4010a, second building panel 4010b, third building panel 4010c, and fourth building panels 4010d are identical to the building panel 10 previously described herein, except that 4000-series numbers will be used.

The building panel assembly 5c includes positioning the first building panel 4010a adjacent to the second building panel 4010b, which is positioned adjacent to the third building panel 4010c, which is positioned adjacent to the fourth building panel 4010d. The panel aesthetic features 4030a, 4030b, 4030c, and 4030d of the first building panel 4010a, the second building panel 4010b, the third building panel 4010c, and the fourth building panel 4010d may each be distinct from each other, thereby creating an aesthetic match configuration across the entirety of the first major exposed surfaces 4011A, 4011B, 4011C, 4011D of each the building panels 4030a, 4030b, 4030c, and 4030d of the building panel assembly 5c.

The term "aesthetic match configuration" refers to multiples of the building panel assembly 5c comprising the multiple building panels 4010 (in this exemplified embodiment, the first building panel 4010a, the second building panel 4010b, the third building panel 4010c, and the fourth building panel 4010d, each having panel aesthetic features 4030a, 4030b, 4030c, and 4030d that are not identical to each other and not exact mirror of each other but, in totality, create cohesive appearance across the first major exposed surfaces 4011A, 4011B, 4011C, 4011D even though the channels and grooves may not perfectly align with each other at the respective side surfaces 4013 of each building panel 4010.

The present invention further comprise for a building system 1 including a vertical wall 4 extending between a ceiling 3 and a floor 2, whereby the at least one building panel 10 is supported vertically by the vertical wall 5 on a wall surface 6.

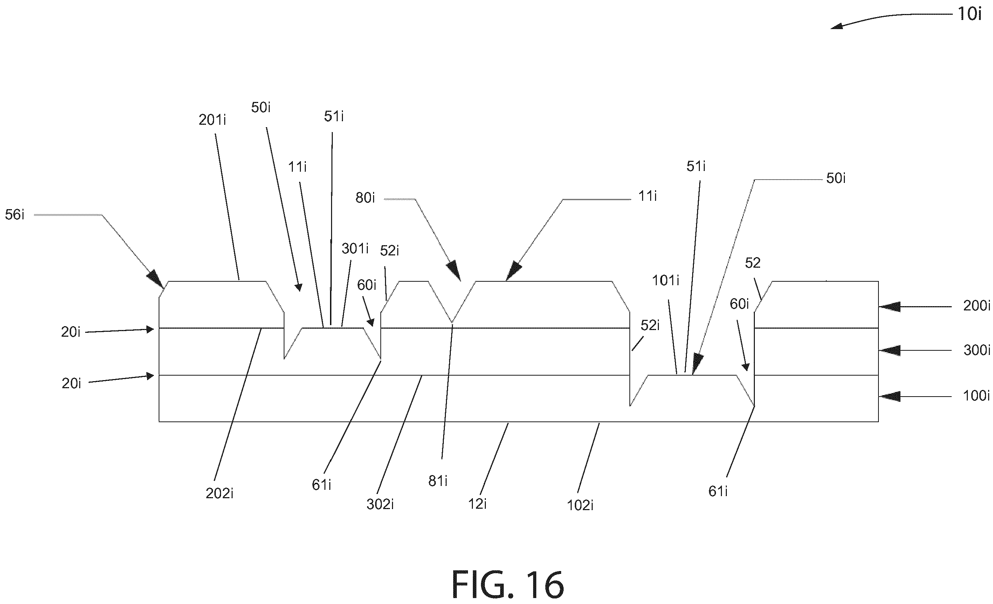

Referring now to FIG. 16, a building panel 10i according to an alternative embodiment will be described herein. The building panel 10i of this embodiment is identical to that of the previously discussed embodiments except for the differences noted herein. The same numbering convention will be used except with a roman numeral "i" suffix. According to this embodiment, the building panel 10i may comprise at least one intermediate layer 300i (also referred to as a "third layer" 300i). The intermediate layer 300i may comprise a first major surface 301i opposite a second major surface 302i and be positioned between the first layer 100i and the second layer 200i of the building panel 10i.

According to the embodiment of FIG. 16, at least one of the channels 50i may be formed into the first major exposed surface 11i of the building panel 10i such that the channel floor 50i is formed by the third layer 300i. In such embodiments, at least one of the channels 50i may be formed into the first major exposed surface 11i of the building panel 10i such that the channel floor 50i is formed by first major exposed surface 301i of the third layer 300i. The channel walls 52i of the at least one channel 50i may be formed by the second layer 200i and the third layer 300i.

According to the embodiment of FIG. 16, at least one of the channels 50i may be formed into the first major exposed surface 11i of the building panel 10i such that the channel floor 50i is formed by the first layer 100i. In such embodiments, at least one of the channels 50i may be formed into the first major exposed surface 11i of the building panel 10i such that the channel floor 50i is formed by first major exposed surface 101i of the third layer 100i. The channel walls 52i of the at least one channel 50i may be formed by the first layer 100i, the second layer 200i, the third layer 300i.

As such, the building panel 10i may comprise a plurality of channels 50i having varying channel depth.

According to the embodiment of FIG. 16, at least one of the grooves 80i may be formed into the first major exposed surface 11i of the building panel 10i such that the groove floor 81i is formed by the second layer 200i.

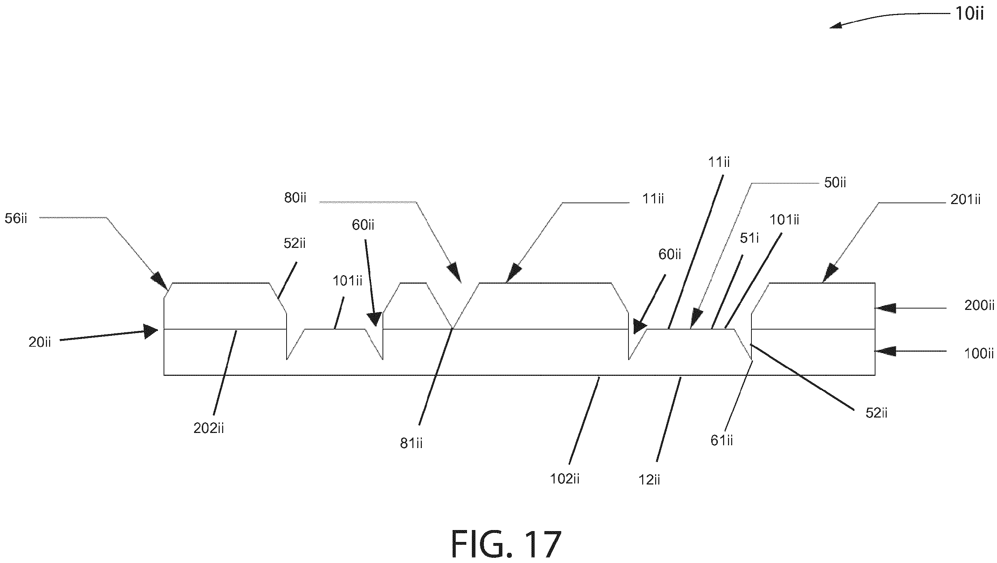

Referring now to FIG. 17, a building panel 10ii according to an alternative embodiment will be described herein. The building panel 10ii of this embodiment is identical to that of the previously discussed embodiments except for the differences noted herein. The same numbering convention will be used except with a roman numeral "ii" suffix.

According to the embodiment of FIG. 17, at least one of the grooves 80ii may be formed into the first major exposed surface 11ii of the building panel 10i such that the groove floor 81ii is formed at the interface 20ii between the first layer 100ii and the second layer 200ii.

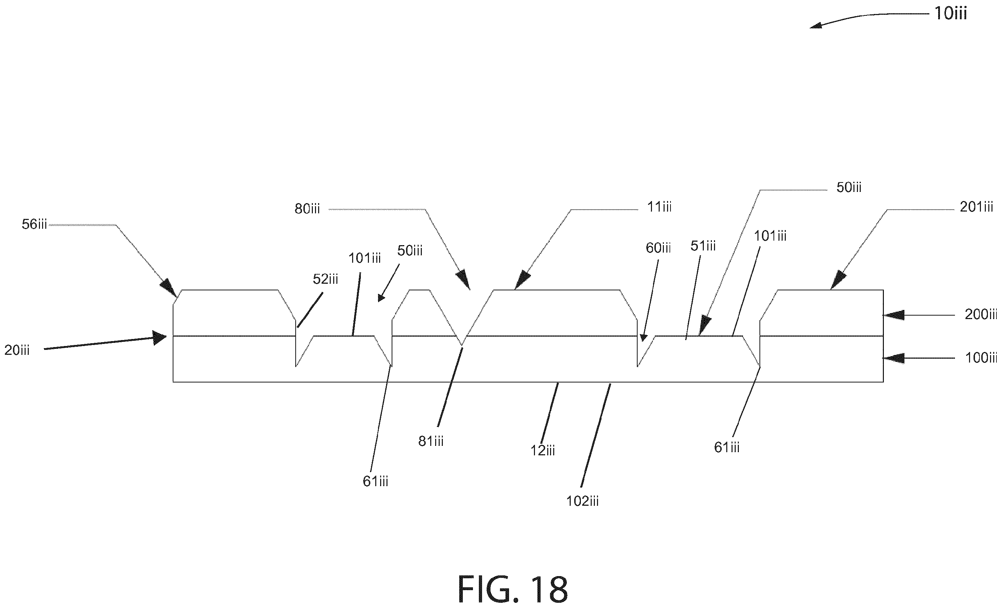

Referring now to FIG. 18, a building panel 10iii according to an alternative embodiment will be described herein. The building panel 10iii of this embodiment is identical to that of the previously discussed embodiments except for the differences noted herein. The same numbering convention will be used except with a roman numeral "iii" suffix.

According to the embodiment of FIG. 18, at least one of the grooves 80iii may be formed into the first major exposed surface 11iii of the building panel 10ii such that the groove floor 81iii is formed by the first layer 100i. In such embodiments, the groove 80 may extend through the entirety of the second layer 200ii and past the first major surface 101ii of the first layer 100ii.

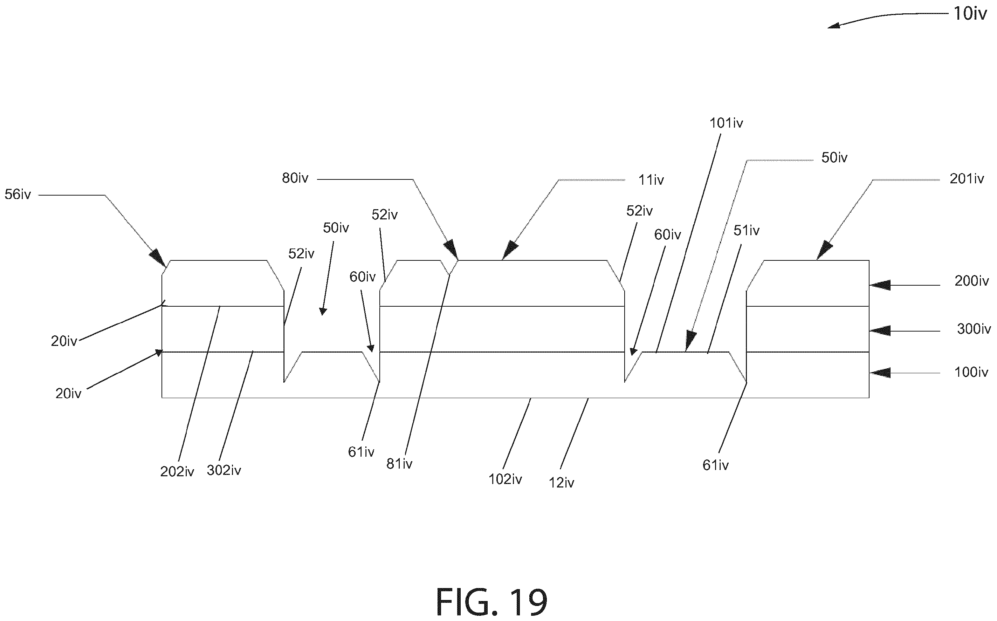

Referring now to FIG. 19, a building panel 10iv according to an alternative embodiment will be described herein. The building panel 10iv of this embodiment is identical to that of the previously discussed embodiments except for the differences noted herein. The same numbering convention will be used except with a roman numeral "iv" suffix. According to this embodiment, the building panel 10iv may comprise at least one intermediate layer 300iv (also referred to as a "third layer" 300iv). The intermediate layer 300iv may comprise a first major surface 301iv opposite a second major surface 302iv and be positioned between the first layer 100iv and the second layer 200iv of the building panel 10iv.

According to the embodiment of FIG. 19, a plurality of channels 50ii may be formed into the first major exposed surface 11iv of the building panel 10iv such that the channel floor 50iv of the plurality of channels 50iv are formed by the third layer 300iv. In such embodiments, a plurality of channels 50i may be formed into the first major exposed surface 11iv of the building panel 10iv such that the channel floors 50iv of each of the plurality of channels 50iv are formed by first major exposed surface 301iv of the third layer 300iv. The channel walls 52iv of the plurality of channels 50iv may be formed by the second layer 200iv and the third layer 300iv The channel walls 52iv of the plurality of channels 50iv may be formed by the first layer 100iv, the second layer 200iv and the third layer 300iv..

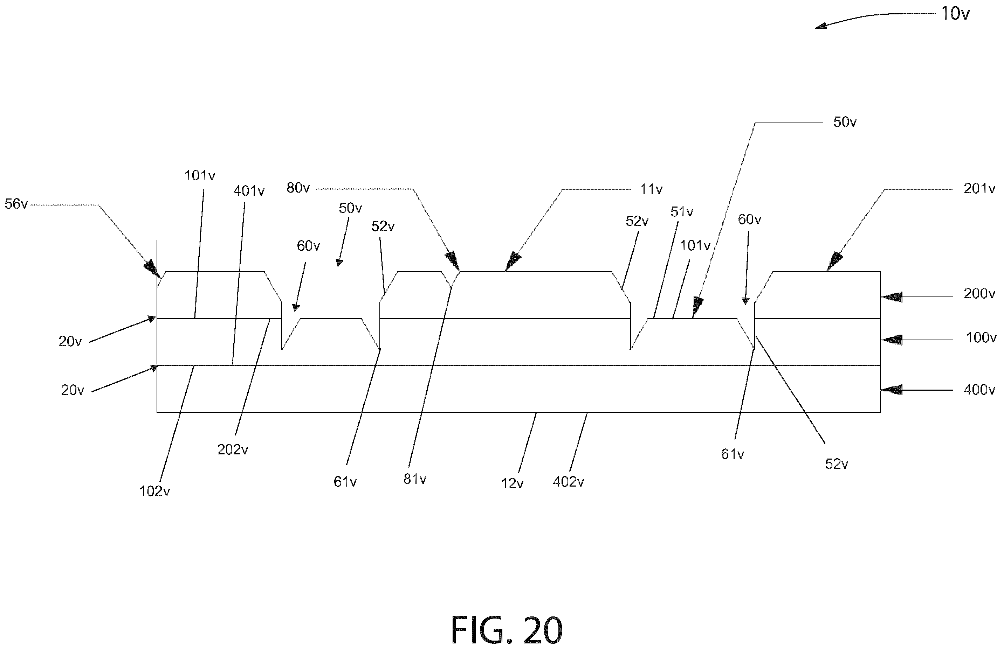

Referring now to FIG. 20, a building panel 10v according to an alternative embodiment will be described herein. The building panel 10v of this embodiment is identical to that of the previously discussed embodiments except for the differences noted herein. The same numbering convention will be used except with a roman numeral "v" suffix. According to this embodiment, the building panel 10v may comprise a backing layer 400v. The backing layer 400v may comprise a first major surface 401v opposite a second major surface 402v and be positioned underneath the first layer 100v of the building panel 10iv. In such embodiments, the second major surface 402v of the backing layer 400v may form the second major exposed surface 12v of the building panel 10v

According to the embodiment of FIG. 20, the backing layer 400v may be a single continuous body that is substantially free of grooves and/or channels. The body of the backing layer 400 may be formed of the same material as the first layer 100v and/or the second layer 200v - as well as potentially another material such as metal, wood, or plastic.

The present invention further provides a method of manufacture of the building panel 10. The method may comprise providing the first layer 100 comprising the first portion 400 of grooves 80 as well as the plurality of channel grooves 60 formed into the first major surface 101 of the first layer 100. The method may further comprise providing the plurality of second bodies 220, whereby at least one of the second bodies 220 comprise the second portion 500 of the groove 80. Subsequently, the side surface 223 of each of the plurality of second bodies 220 may be aligned to the plurality of channel grooves 60 on the first layer 100. After the alignment step, the second bodies 220 may be secured to the first layer 100 to form the building panel 10.

Prior to alignment, adhesive may be applied to the second portion 101b of the first major surface 101 of the first layer 100. Prior to alignment, adhesive may be applied to the lower surface 222 of each of the second bodies 220.

After alignment, pressure may be applied to the first major surface 201 of the second layer 200 and the second major surface 102 of the first layer 100 to ensure proper bonding of the two layers within the interface 20.

The method may further comprise a step prior to alignment, whereby a first sheet of material may be machined to form the first portion 400 of the plurality of grooves 80 and the channel grooves 60 into the first sheet - thereby forming the first layer 100. The first sheet of material may be formed from the fibrous material. The first sheet may be machined by knife. The knife may be configured to operate on a CNC.

The method may further comprise a step prior to alignment, whereby a second sheet of material may be machined to form the plurality of second bodies 220 comprising the second portion 500 of the plurality of channels 80 into the second sheet. The second sheet may be machined by knife. The knife may be configured to operate on a CNC. The second sheet of material may be formed from the fibrous material.

While the invention has been described with respect to specific examples including presently preferred modes of carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the spirit and scope of the invention should be construed broadly as set forth in the appended claims.

## Claims

1. A building panel having a first major exposed surface opposite a second major exposed surface, the building panel comprising:
a first layer comprising a first major surface opposite a second major surface;
a second layer comprising a first major surface opposite a second major surface;
a plurality of channels formed into the first major exposed surface,
a floor of each of the plurality of channels, the floor comprising at least a first portion of the first major surface of the first layer;
a plurality of grooves formed into the first major exposed surface, each of the plurality of grooves extending across the first major surface of the second layer and the first portion of the first major surface of the first layer.

2. The building panel according to claim 1, wherein each of the plurality of grooves extend discontinuously across the first major surface of the first layer to the first portion of the first major surface of the second layer.

3. The building panel according to any one of claims 1 to 2, wherein
the first layer has a first layer thickness as measured between the first major surface and the second major surface of the first layer;
the second layer has a second layer thickness as measured between the first major surface and the second major surface of the second layer;
each of the plurality of channels have a channel depth as measured from the first major exposed surface of the building panel to the floor of the channel;
wherein each of the plurality of grooves has a groove depth as measured from a groove opening to a groove floor; and
wherein the channel depth is equal to or greater than the second layer thickness.

4. The building panel according to any one of claims 1 to 3, wherein the first layer exhibits a first visual aesthetic characteristic and the second layer exhibits a second visual characteristic, wherein the first visual aesthetic characteristic and the second visual characteristic are different.

5. The building panel according to any one of claims 1 to 4, wherein the building panel further comprises a panel side surface extending between the first major exposed surface and the second major exposed surface, the panel side surface forming a perimeter of the building panel; and wherein each of the plurality of channels intersect the panel side surface.

6. The building panel according to claim 5, wherein the side surface of the building panel comprises a first side surface opposite a second side surface as well as a third side surface opposite a fourth side surface, wherein the first side surface intersects the third side surface; and
wherein at least one of the plurality of channels intersect the first side surface and at least one of the second side surface, the third side surface, and the fourth side surface.

7. The building panel according to claim 6, wherein each of the plurality of grooves intersect the first side surface and at least one of the second side surface, the third side surface, and the fourth side surface.

8. The building panel according to any one of claims 3 to 7, wherein each of the plurality of channels have a channel width as measured at the first major exposed surface of the building panel and each of the plurality of grooves have a groove width as measured at the groove opening, wherein the channel width is greater than the groove width.

9. A building system comprising at least one of the building panels according to any one of claims 1 to 8, the building system comprising a vertical wall and the at least one building panel configured to be secured to the vertical wall.

10. The building system according to claim 9, wherein the at least one building panel is secured to the vertical wall at a securing point on the second major exposed surface of the building panel.

11. The building system according to claim 10, wherein the second major exposed surface of the at least one building panel is secured to the vertical wall by fastener.

12. A method of manufacturing a building panel comprising:
a) providing a first layer having a first major surface opposite a second major surface and a side surface extending between the first major surface and the second major surface of the first layer, the side surface forming a perimeter of the first layer, the first layer further comprising a plurality of grooves and a plurality of channel grooves formed into the first major surface;
b) providing a plurality of second bodies each having a first major surface opposite a second major surface and a side surface extending between the first major surface and the second major surface of the second bodies, at least one of the plurality of second bodies comprising at least one groove formed into the first major surface of the second body;
c) aligning the side surface of each of the plurality of second bodies to the plurality of channel grooves on the first layer; and
d) coupling the second bodies to the first layer to form the building panel.

13. The method according to claim 12, wherein prior to step a), the method further comprises shaping a first sheet of material to form the plurality of grooves and the plurality of channels into the first sheet to form the first layer.

14. The method according any one of claims 12 to 13, wherein prior to step b), the method further comprises shaping a second sheet of material to form the plurality of second bodies that comprise the at least one groove.

15. The method according to claim 14, wherein the first sheet of material and the second sheet of material are formed of felt.
